# EUROPÄISCHE PATENTSCHRIFT

(11) **EP 2 569 550 B1**
(45) Veröffentlichungstag und Bekanntmachung des Hinweises auf die Patenterteilung: **20.05.2015**
(21) Anmeldenummer: 11827769.8
(22) Anmeldetag: 19.12.2011
(51) Int. Cl.: F16B 39/24, F16B 39/282

(54) **SELBSTSICHERNDE BEFESTIGUNGSMITTEL SOWIE BEFESTIGUNGSANORDNUNG**
SELF SECURING FASTENING MEANS, AND FASTENING ARRANGEMENT
MOYEN DE FIXATION AUTOBLOQUANT ET SYSTÈME DE FIXATION

(30) Priorität: 22.12.2010 DE 102010055535; 28.07.2011 DE 102011052266
(43) Veröffentlichungstag der Anmeldung: 20.03.2013
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2011/073202
(87) Internationale Veröffentlichungsnummer: WO 2012/084792

(56) Entgegenhaltungen:
- WO-A2-02/097283

## Beschreibung

Die Erfindung betrifft selbstsichernde Befestigungsmittel gemäß dem Oberbegriff des Anspruchs 1 zum Zusammenwirken mit einem Außengewinde, um auf ein zu sicherndes Bauteil eine Spannkraft auszuüben bzw. um das Bauteil gegen Verlieren zu sichern. Ferner betrifft die Erfindung eine Befestigungsanordnung mit solchen Befestigungsmitteln gemäß Anspruch 18. Darüber hinaus betrifft die Erfindung ein Verfahren zum Sichern eines zu sichernden Bauteils gemäß Anspruch 19.

Zum Sichern von Radnaben auf einem Achszapfen eines Kraftfahrzeuges gegen unbeabsichtigtes Lösen ist es bekannt, bei aufgesteckter Radnabe auf das Außengewinde des Achszapfens eine Mutter aufzuschrauben und diese nach dem Festziehen formschlüssig drehfest mit dem Achszapfen zu verbinden, indem die Schraubenmutter von radial außen nach radial innen kraftbeaufschlagt wird und dadurch in entsprechende nach radial innen ragende Ausformungen im axialen Endbereich des Achszapfens eingeformt wird. Das Befestigungsverfahren ist daher vergleichsweise aufwändig und benötigt eine Vielzahl von Arbeitsschritten und Werkzeuge. Darüber hinaus ist ein Lösen der Schraubenmutter aufgrund der formschlüssigen Verbindung zum Achszapfen, beispielsweise zur Reparatur- bzw. Austauschzwecken nur sehr aufwändig möglich.

Grundsätzlich sind selbstsichernde Befestigungsmittel zum Ausüben einer Spannkraft auf ein zu sicherndes Bauteil (nicht jedoch im Zusammenhang mit Radnaben) bekannt, die neben einer, erste auf einer unteren Stirnseite angeordnete Nockenflächen aufweisenden Schraubenmutter ein Ringelement, umfassen, welches auf einer der Schraubenmutter zugewandten oberen Stirnseite zweite Nockenflächen zum Zusammenwirken mit den ersten Nockenflächen der Schraubenmutter aufweist. Derartige selbstsichernde Befestigungsmittel sind beispielsweise in der EP 1 255 051 A1, der EP 0 889 251 B1, der EP 0 350 711 B1, der US 5,203,656, der US 5,626,449, der US 6,554,552 B2, der US 5,409,338, der US 6,039,524 sowie der US 5,688,091 beschrieben. Sämtlichen der vorstehenden, bekannten selbstsichernden Befestigungsmitteln ist gemein, dass die als Rampen ausgebildeten Nockenflächen, entgegen der Festziehrichtung der Schraubenmutter, d.h. in eine Löserichtung der Schraubenmutter betrachtet in die axiale Einschraubrichtung, in welcher die Schraubenmutter beim Festziehen auf das zu sichernde Bauteil zu verstellen ist ansteigen, so dass die Schraubenmutter bei Kraftbeaufschlagung in Löserichtung durch Zusammenwirken der ineinandergreifenden Nockenflächen axial von dem Ringelement weg verstellt wird. Damit sich die bekannten Befestigungsmittel wieder mittels eines Werkzeuges lösen lassen ist sowohl an der Schraubenmutter als auch an dem Ringelement ein Antrieb in Form von Schlüsselflächen zum Zusammenwirken mit einem Werkzeug, insbesondere einem Schraubenschlüssel vorgesehen.

Eine Sicherung der Radnabe an dem Achszapfen mit Hilfe von zuvor beschriebenen Befestigungsmitteln hat sich in nicht öffentlichen Versuchen der Anmelderin als nicht sicher erwiesen. Es wurde in den internen Versuchen beobachtet, dass sich die selbstsichernden Befestigungsmittel im Prüfstand von dem Achszapfenaußengewinde lösen.

Aus der WO 02/097283 A2 ist eine Sicherungsmutter bekannt, die mehrere, jeweils separat wirkende Sicherungsmittel aufweist. Mit einem ersten Sicherungsmittel in Form eines axialen Ringfortsatzes stützt sich die Sicherungsmutter an einem Ringelement ab, wodurch die Sicherungsmutter gemäß der Lehre der WO 02/097283 A2 axial gegen die nach unten weisenden Flanken eines sie durchsetzendes Außengewinde gepresst wird. Als zusätzliches Sicherungsmittel sind ringkragenförmige Federmittel vorgesehen, die diese Axialverspannung verstärken. Ein weiteres Sicherungsmittel sind an der Schraubenmutter angeordnete Nocken vorgesehen, wobei die Nocken in der Festziehrichtung der Schraubenmutter betrachtet entgegen der axialen Einschraubrichtung ansteigen. Insofern unterscheiden sich die Nocken der gezeigten Schraubenmutter gegenüber dem vorgenannten Stand der Technik.

Wie sich aus der Beschreibung der WO 02/097283 A2 ergibt, sind die Nocken derart ausgelegt, dass diese über die Gegennocken des Ringelementes beim Festziehen gleiten, wodurch axiale Schläge bewirkt werden. Die Nocken werden deshalb in der Druckschrift auch als Schlagnocken bezeichnet, die dazu dienen, um hierdurch mikroskopisch erkennbare Einformungen in einem darunter angeordneten Werkstück zu erzeugen, mit dem Ziel die Reibwirkung zwischen Ringelement und Werkstück zu erhöhen. Als weiteres separates Sicherungsmittel sind Bremsmomentmittel beschrieben, die durch plastisches Verformen eines Sonder-Gewindes Winkung entfalten. Die beschriebenen Bremsmomentmittel können nur ein vergleichsweise geringes Bremsmoment erzeugen. Insgesamt sind die dargestellten selbstsichernden Befestigungsmittel verbesserungsbedürftig. Insbesondere kann mit den gezeigten Befestigungsmitteln ein Lösen der Schraubenmutter bei einem Verdrehen des Ringselementes entgegen der Festziehrichtung nicht verhindert werden.

Zudem wird beim Festziehen der Schraubenmutter durch das Übereinanderratschen der Nocken die Reibung zwischen dem Ringelement und dem Untergrund in unzulässiger Weise erhöht, wodurch die Gefahr resultiert, dass das Ringelement bei einem Verdrehen des Untergrundes in eine Löserichtung mitgenommen wird und dabei die Schraubenmutter löst.

Aus der US 2003/0077143 A1 sind alternative Befestigungsmittel bekannt, bei denen Schraubenmutter und Ringelement über Nockenflächen zusammenwirken, die in der Festziehrichtung betrachtet entgegen der axialen Einschraubrichtung ansteigen. Bei der in der Druckschrift beschriebenen Ausführungsform kann jedoch nicht verhindert werden, dass die Schraubenmutter bei einem Verdrehen des Ringelementes in Löserichtung mitgenommen wird. Darüber hinaus ratschen die Nocken in ungünstiger Weise beim Fixieren der Schraubenmutter übereinander und erhöhen damit die Reibung bzw. beschädigen die Materialoberflächen.

Aus der JP 2003/120643 A ist eine weitere Ausführungsform von Befestigungsmitteln bekannt, bei der ein Ringelement über Formschlussmittel drehfest an einem Außengewindeteil festgelegt ist. Beim Fixieren der Schraubenmutter kommt es zu einem ungünstigen Überratschen der Nockenflächen.

Aus der DE 10 2004 014 301 A1 ist eine Radschraube bekannt, die zum Fixieren eines Kraftfahrzeugrades dient. Die Radschraube kommt ohne Nockenflächen aus und eignet sich nicht zur Fixieren von Radnarben auf Achszapfen von Kraftfahrzeugen.

Aus der JP 2000027837 A eine Sicherungsschraube bekannt, die sich über Nockenflächen an einem Ringelement abstützt, wobei die Nocken in der axialen Einschraubrichtung ansteigen.

Aus der JP 60-167226 sind Befestigungsmittel bekannt, die eine Mutter mit Nockenflächen aufweisen, wobei die Nockenflächen in der Festziehrichtung betrachtet entgegen der axialen Einschraubrichtung ansteigen. Das Ringelement stützt sich in nachteiliger Weise über reibungserhöhende Zacken am Untergrund ab, kann dadurch in Löserichtung mitgenommen werden, wobei auch ein daraus resultierendes Lösen der Mutter nicht sicher verhindert werden kann.

Aus der DE 60 206 116 T2 sind Befestigungsmittel bekannt, bei denen ein Ringelement drehfest an einem Außengewindeelement über Formschlussmittel fixierbar ist.

Die DE 10 205 300 C1 beschreibt ein lösbares Verbindungselement in Form einer Schraube, die Nockenflächen aufweist, die in nachteiliger Weise in der Festziehrichtung betrachtet in der axialen Einschraubrichtung ansteigen. Die bekannte Schraube weist Festziehanschlagflächenpaare auf.

Ein Lösen der Schraube bei einem Verdrehen des Gegennockenparts kann nicht sicher vermieden werden.

Aus der WO 2004/033139 A2 sind Befestigungsmittel bekannt, bei denen ein Lösen derselben nicht sicher verhindert werden kann. Die bekannten Befestigungsmittel arbeiten mit Nockenflächen, welche in der Festziehrichtung betrachtet in der axialen Einschraubrichtung ansteigen. Insbesondere für Anwendungen, bei denen das Ringelement aufgrund einer entsprechenden Bewegung des Hintergrundes, wie beim Fixieren von Radnarben auf Achszapfen entgegen der Festziehrichtung mitgenommen wird, kann ein Lösen nicht sicher verhindert werden.

Die DE 1 625 279 zeigt Befestigungsmittel die auf Basis einer Nockenverstellung eine Vorspannung bewirken, wobei eine Sicherung gegen selbsttätiges Lösen nicht gesichert ist.

Aus der FR 415345 sind Befestigungsmittel bekannt, die über schiefe Ebenen zusammenwirken.

Die EP 2009 158 A1 zeigt ebenfalls Befestigungsmittel zur Fixierung von Bauteilen.

Ausgehend von dem vorgenannten Stand der Technik liegt der Erfindung die Aufgabe zugrunde, selbstsichernde Befestigungsmittel anzugeben, welche u.a. zum Sichern von Radnaben an Achszapfen von Kraftfahrzeugen geeignet sind bevorzugt ohne die Notwendigkeit die Befestigungsmittel formschlüssig mit dem Achszapfen zu verbinden. Ferner besteht die Aufgabe darin, eine entsprechend verbesserte Befestigungsanordnung, umfassend ein selbstsicherndes Befestigungsmittel, eine Radnabe und einen Außengewindeachszapfen anzugeben. Zudem besteht die Aufgabe darin, ein vereinfachtes Verfahren zum Fixieren einer Radnabe an einem Achszapfen eines Kraftfahrzeugs anzugeben.

Diese Aufgabe wird hinsichtlich der selbstsichernden Befestigungsmittel mit den Merkmalen des Anspruchs 1, hinsichtlich der Befestigungsanordnung mit den Merkmalen des Anspruchs 18 und hinsichtlich des Verfahrens mit den Merkmalen des Anspruchs 19 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfinder hat erkannt, dass eine Ursache für das Lösen bekannter Sicherungselemente von dem Außengewinde eines Achszapfens darin begründet ist, dass die Radnabe in der Regel über eine spielbehaftete Keilverzahlung an dem Achszapfen festgelegt ist, und das Spiel eine minimale Relativbewegung von Achszapfen und Radnabe in Umfangsrichtung zulässt. Bei den im Betrieb auftretenden in die Umfangsrichtungen wechselnden Belastungen führt dies dazu, dass bei bekannten selbstsichernden Befestigungsmitteln das Ringelement von der Radnabe in eine Löserichtung mitgenommen wird, wodurch sich die Vorspannung zwischen Schraubenmutter und Ringelement verringert oder sogar löst, wodurch wiederum die Sicherungsfunktion verloren geht und sich die Sicherungsmittel von dem Achszapfen ablösen können. Die Erfindung hat ferner erkannt, dass der (Druck-)Spannungsverlust zwischen Ringelement und Schraubemutter darauf zurückzuführen ist, dass bei den bekannten selbstsichernden Befestigungselementen meist die in Wechselwirkung tretenden Nockenflächen der Schraubenmutter und des Ringelementes in Festziehrichtung betrachtet in die axiale Einschraubrichtung abfallen, wodurch sich die Schraubenmutter und das Ringelement im oben erläuterten Fall aufeinander zu bewegen. Zur Behebung der vorgenanten Nachteile bzw. des geschilderten Problems schlägt die Erfindung vor, die selbstsichernden Befestigungsmittel derart abzuwandeln, dass die mindestens eine erste Nockenfläche und/oder die mindestens eine zweite Nockenfläche in die entgegengesetzte Axialrichtung geneigt sind, wie beispielsweise die in der EP 1 255 051 A1 gezeigten Nockenflächen, so dass Schraubenmutter und Ringelement bei Kraftbeaufschlagung des Ringelementes in Löserichtung der Schraubenmutter axial voneinander weg verstellt und damit stärker vorgespannt werden. Anders ausgedrückt schlägt die Erfindung vor, die mindestens eine erste Nockenfläche und/oder die mindestens eine zweite Nockenfläche in der Festziehrichtung betrachtet entgegen der axialen Einschraubrichtung ansteigen zu lassen, dass also die Steigung der ersten und/oder zweiten Nockenfläche der Innengewindesteigung des Innengewindes der Schraubenmutter entgegengerichtet ist, wobei die Steigung der ersten und/oder zweiten Nockenfläche größer ist als die Gewindesteigung des Innengewindes der Schraubenmutter.

Nimmt bei den erfindungsgemäßen selbstsichernden Befestigungsmitteln das zu sichernde Bauteil, insbesondere die Radnabe das Ringelement entgegen der Festziehrichtung ein Stück weit mit, bewirkt dies, dass die zweite Nockenfläche entgegen der Festziehrichtung, d.h. in eine Löserichtung verstellt wird und dadurch die Schraubenmutter entgegen der axialen Einschraubrichtung gedrückt wird, wodurch wiederum die Vorspannung zwischen Schraubenmutter und Ringelement erhöht wird, was dann den selbstsichernden Effekt mit sich bringt. Das Festziehdrehmoment der erfindungsgemäßen selbstsichernden Befestigungsmittel erhöht sich quasi automatisch. Die ersten und zweiten Nockenflächen sind also derart ausgebildet, dass sie so zusammenwirken, dass sie die Schraubenmutter und das Ringelement bei Kraftbeaufschlagung des Ringelementes entgegen der Festziehrichtung axial voneinander beabstanden und dadurch verspannen. Die nach dem Konzept der Erfindung ausgebildeten Befestigungsmittel eignen sich also erstmals für Befestigungsanordnungen, bei denen die Tendenz besteht, dass das Ringelement in Löserichtung kraftbeaufschlagt wird.

Die Umfangserstreckung der ersten und der zweiten Nockenfläche sollte so aufeinander abgestimmt sein, dass eine Relativverstellbewegung von Schraubenmutter und Ringelement über einen Umfangsabschnitt möglich ist, um das Vorspannen zu ermöglichen.

Erfindungsgemäß ist weiter vorgesehen, dass der Gewindeverbindung aus Schraubenmutter und Außengewinde, vorzugsweise an der Schraubenmutter ausgebildete Bremsmomentmittel zugeordnet sind, die weiter erfindungsgemäß so dimensioniert sind, dass diese die Reibung zwischen der Schraubenmutter und den Außengewinden derart erhöhen, dass die Schraubenmutter still steht, d.h. dass ein Verdrehen der Schraubenmutter verhindert wird, wenn das Ringelement sich aufgrund einer entsprechenden Bewegung, insbesondere Schwenk- oder Drehbewegung des Untergrundes entgegen der Festziehrichtung verdreht, um hierdurch ein Aufeinandergleiten der ersten und zweiten Nocken, d.h. eine Relativverdrehbewegung der Nocken sicherzustellen, um hierdurch wiederum eine axiale Relativverstellbewegung zwischen Schraubenmutter und Ringelement zu bewirken bzw. zu garantieren, um hierdurch wiederum Schraubenmutter und Ringelement stärker axial gegeneinander zu verspannen und somit ein selbsttätiges Lösen zu verhindern. Die Erfindung hat also entgegen der Lehre der WO 02/097283 A2 erkannt, dass es nicht einfach ausreicht zusätzlich zu schräg verlaufenden Nocken sozusagen als weiteres oder alternatives Sicherungsmittel Bremsmomentmittel vorzusehen, sondern dass es notwendig ist, diese Bremsmomentmittel derart zu dimensionieren, bzw. auf die Reibung zwischen den ersten und zweiten Nocken abzustimmen, dass die Schraubenmutter bei einer Verdrehbewegung des Ringelementes entgegen der Festziehrichtung stehen bleibt. Nur hierdurch wird erst ein stärkeres Verspannen der Schraubenmutter gegenüber dem Ringelement und damit eine Sicherung gegen ein selbsttätiges Lösen sicher verhindert. Wie später noch erläutert werden wird, ist in Weiterbildung der Erfindung vorgesehen, die Bremsmomentmittel derart auszubilden, dass diese, das Bremsmoment, vorzugsweise ausschließlich, durch elastische Verformung eines Abschnitts der Bremsmomentmittel bewirken, wie dies beispielsweise durch die in der WO 2007/076968 A1 bekannten Bremsmomentmittel erreicht werden kann. Die in der WO 02/097283 A2 gezeigten Bremsmittel arbeiten vollständig aufgrund einer plastischen, d.h. nicht reversiblen Verformung und sind nicht dazu ausgelegt, das erforderliche Bremsmoment aufzubringen. Dieses beträgt bevorzugt für Radbefestigungsanwendungen mehr als 25 Nm, vorzugsweise mehr als 30 Nm, ganz besonders bevorzugt zwischen etwa 31 Nm und etwa 80Nm oder mehr, vorzugsweise zwischen 31 Nm und 50Nm.

Werden die Bremsmittel derart ausgebildet, dass diese ausschließlich durch elastische Verformung eines Abschnittes der Bremsmomentmittel das Bremsmoment erzeugen kann zumindest eines der zusammenwirkenden Gewinde, also im Falle der Anordnung der Bremsmomentmittel an der Schraubenmutter das Außengewinde in vorteilhafter Weise als Normgewinde, insbesondere als metrisches Normgewinde oder als Zollnormgewinde ausgebibldet werden. Die Verwendung von Sondergewinden wie beispielsweise eines Sägezahngewindes kann mit Vorteil unterbleiben.

Optimale Sicherungsergebnisse können dadurch erreicht werden, dass es sich bei der Schraubenmutter nicht um eine herkömmliche Schraubenmutter handelt, sondern um eine Schraubenmutter mit Bremsmomentmitteln, die beim Einschrauben und/oder Lösen ein Bremsmoment bewirken, insbesondere durch Wechselwirkung mit dem Außengewinde, wobei das Bremsmoment das Einschrauben bzw. Lösen erschwert. Hierzu können beispielsweise zwei axial benachbarte Innengewindeabschnitte derart in axialer Richtung und/oder in Umfangsrichtung versetzt zueinander angeordnet sein, dass das gewünschte Drehmoment resultiert. Auch ist es möglich, die Bremsmomentmittel wie in der WO 2007/076968 A1 des Anmelders beschrieben auszubilden. Dort ist an einer der Stirnflächen der - Schraubenmutter ein Ringkragen angeformt und querschnittlich so achswärts gebogen, dass er mit einem die Innengewindeöffnung als Auflagefläche umgebenden Abschnitt jeder Stirnfläche einen dieser unmittelbar zugeordneten Aufnahmeschlitz begrenzt. Erfindungsgemäß sind die Bremsmittel derart ausgebildet und dimensioniert, dass bei einer, insbesondere von dem zu sichernden Bauteil initiierten Drehbewegung des Ringelementes entgegen der Festziehrichtung die Reibungskraft zwischen der mindestens einen ersten Nockenfläche und der mindestens einen zweiten Nockenfläche nicht ausreicht, die Schraubenmutter entgegen der Festziehrichtung mitzuschleppen, sondern dass bevorzugt die Schraubenmutter stationär verharrt, während das Ringelement entgegen der Festziehrichtung verstellt wird und dadurch aufgrund des Aneinandergleitens der Nockenfläche die Vorspannung zwischen der Schraubenmutter und dem Ringelement erhöht wird.

Gemäß der erfindungsgemäßen Lehre ist es zum Erzielen einer optimalen Selbstsicherungsfunktion zusätzlich notwendig der ersten Nockenfläche eine in Festziehrichtung wirksame erste Festziehanschlagsfläche zuzuordnen, die beim Festziehen der Schraubenmutter mit einer an dem Ringelement vorgesehenen zweiten Festziehanschlagfläche zusammenwirkt. Anders ausgedrückt ist zum Festziehen bzw. sichernden Fixieren der Befestigungsmittel, insbesondere des Ringelementes mindestens ein Festziehanschlagflächenpaar vorgesehen, welches sich bevorzugt an einem von einem später noch zu erläuternden Löseanschlagflächenpaar in Festziehrichtung beabstandeten Ende eines Nockenflächenpaares befindet. Das Festziehanschlagflächenpaar umfasst eine erste Festziehanschlagfläche der Schraubenmutter oder alternativ einer fakultativen Nockenscheibe zum Zusammenwirken mit einer zweiten Festziehanschlagfläche des Ringelementes, wobei die erste Festziehanschlagfläche bevorzugt entgegen der Festziehrichtung benachbart zur zweiten Festziehanschlagfläche angeordnet ist, so dass die erste Festziehanschlagfläche beim Verdrehen der Schraubenmutter in Festziehrichtung mittels eines Werkzeugs die zweite Festziehanschlagfläche und damit das Ringelement in der Festziehrichtung, insbesondere nach dem Überwinden der Nockenflächensteigungen, mitnehmen kann. Ganz besonders bevorzugt ist es, wenn das Festziehanschlagflächenpaar parallel zu einem Löseanschlagflächenpaar ausgerichtet und angeordnet sowie in Festziehrichtung beabstandet ist.

Derartige Festziehanschlagsflächen sind in der WO 02/0997283 A2 nicht vorgesehen bzw. widersprechen sogar der dortigen Lehre, da bei den aus der vorgenannten Druckschrift bekannten Befestigungsmittel die Nockenflächen dazu dienen, um beim Festziehen übereinander zu ratschen, um hierdurch ein Ansteigen und Absinken des Drehmomentes zu bewirken, mit dem Ziel axiale Schläge auszuführen, um die Reibung zwischen Ringelement und Untergrund zu erhöhen. Die Nocken werden daher in der vorgenannten Druckschrift auch als so genannte Schlagnocken (bump-cams) bezeichnet. Ziel ist es dabei, mikroskopisch sichtbare Vertiefungen in das Werkstück einzutreiben, um hierdurch den Reibungsverbund zu erhöhen. Gerade dies soll gemäß der Erfindung, durch das Vorsehen der Festziehanschlagflächen verhindert werden. Die Reibung zwischen Ringelement und Untergrund soll möglichst minimal sein. Zudem ermöglichen erst die Festziehanschlagflächen, dass später noch zu erläuternde Befestigungs- bzw. Sicherungsverfahren, nach welchem die Schraubenmutter zunächst bis zu dem Erreichen eines ersten Festzieh-Drehmomentes angeschraubt und danach zurückverdreht wird, wobei bei dem Anschrauben die Festziehanschlagflächen eines Festziehanschlagpaares aneinander anliegen.

Zusammenfassend hat die Erfindung erkannt, dass eine Vielzahl von Merkmalen nicht nur realisiert sondern auch aufeinander abgestimmt werden müssen, damit die selbstsichernden Befestigungsmittel ihre Selbstsicherungsfunktion zuverlässig erfüllen. So ist es notwendig, um ein Überratschen der Nockenflächen zu verhindern, mindestens ein Festziehanschlagflächenpaar vorzusehen, das beim Festziehen der Schraubenmutter zusammenwirkt um somit das Ringelement mitzuverdrehen. Darüber hinaus ist es wesentlich, dass die Bremsmittel, welche vorzugsweise an der Schraubenmutter ausgebildet sind, und welche vorzugsweise ausschließlich durch elastische Verformung wirken, d.h. reversibel verformbar sind, so ausgelegt sind, dass ein ausreichend großes Bremsmoment erzeugt wird, welches sicher verhindert, dass die Schraubenmutter mitverdreht wird, wenn das Ringelement entgegen der Festziehrichtung, d.h. in Löserichtung bewegt wird. Nur hierdurch kann sichergestellt werden, dass Ringelement und Schraubenmutter axial stärker gegeneinander verspannt werden, wodurch erst die Sicherungsfunktion zuverlässig erfüllt wird.

In Weiterbildung der Erfindung ist mit Vorteil vorgesehen, dass sich die Schraubenmutter ausschließlich über Nockenflächen, d.h. beispielsweise nicht über eine in der WO 02/097283 A2 beschriebenen Abstützring bzw. Fortsatz an dem Ringelement abstützt.

Im Falle des Vorsehens der Nockenscheibe stützt sich diese ausschließlich über Nockenflächen an dem Ringelement ab. Anders ausgedrückt wird die axiale Verspannung von Schraubenmutter und Ringelement im fixierten Zustand ausschließlich durch das Zusammenwirken von Nockenflächen erreicht. Eine theoretisch mögliche Ausführungsform bei der wie in der WO 02/097283 A2 beschrieben, ein zusätzliches Abstützen über eine weitere Abstützfläche (nicht eine Nockenfläche, beispielsweise ein Ringkragen) realisiert ist, ist der gewünschten Sicherungsfunktion abträglich.

Besonders bevorzugt ist es, wenn die erste Nockenfläche und/oder die zweite Nockenfläche als Rampe mit einem Steigungswinkel ausgebildet sind/ist der größer ist als der Innengewindesteigungswinkel des Innengewindes der Schraubenmutter. Bevorzugt beträgt der Steigungswinkel zumindest einer der Nockenflächen, vorzugsweise jeder der Nockenflächen des mindestens einen Nockenflächenpaares zwischen dem 1,5- bis 6-fachen, vorzugsweise zwischen dem 2- bis 5-fachen, noch weiter bevorzugt zwischen dem 3- bis 4-fachen des Innengewindesteigungswinkels. Wie bereits angedeutet ist es bevorzugt, wenn die Steigung der Nockenflächen eines Nockenflächenpaares und im Falle mehrerer Nockenflächenpaare bevorzugt jeden Nockenflächenpaares gleich ist. Durch den größeren Steigungswinkel wird sichergestellt, dass bei Verschieben des Ringelements in Löserichtung die axiale Spannkraft erhöht wird.

Bevorzugt handelt es sich bei dem zum Einsatz kommenden Ringelement um eine Scheibe, die mit einer ringförmigen Auflagefläche auf der von der Schraubenmutter abgewandten Seite versehen ist, wobei diese Auflagefläche sich bevorzugt in einer Radialebene erstreckt, die senkrecht orientiert ist zur Einschraubrichtung.

Falls der Steigungswinkel zu groß gewählt würde, kann dies zur Folge haben, dass die Nockenflächen als Löseanschlagflächen wirken, was ein Ablösen der Befestigungsmittel zur Folge haben könnte.

In Weiterbildung der Erfindung ist mit Vorteil vorgesehen, dass ein Werkzeugantrieb zum Lösen der Befestigungsmittel ausschließlich an der Schraubenmutter und an keinem weiteren Bauteil der Befestigungsmittel vorgesehen ist, insbesondere nicht an dem Ringelement und/oder später noch zu erläuternden, fakultativen Sicherungsmitteln zum unverlierbaren Halten des Ringelementes an der Schraubenmutter. Anders ausgedrückt können die Befestigungsmittel durch ausschließliches Zusammenwirken eines Werkzeugs mit der Schraubenmutter gelöst werden.

Um die Befestigungsmittel, insbesondere bei Verzicht eines Antriebs zum Zusammenwirken mit einem Werkzeug an dem Ringelement komfortabel lösen zu können, ist in Weiterbildung der Erfindung mit Vorteil vorgesehen, dass die Schraubenmutter mindestens eine erste Löseanschlagsfläche aufweist, die zum Zusammenwirken mit einer zweiten Löseanschlagfläche des Ringelementes ausgebildet und angeordnet ist. Die erste Löseanschlagfläche des Löseanschlagflächenpaares befindet sich in der Festziehrichtung benachbart zur zweiten Löseanschlagfläche und nimmt die zweite Löseanschlagfläche entgegen der Festziehrichtung mit, wenn sie beim Lösen der Schraubenmutter gegen die zweite Löseanschlagfläche des Ringelementes entgegen der Festziehrichtung gedrückt wird. Damit die erste Löseanschlagfläche an der zweiten Löseanschlagfläche anstoßen kann, müssen zunächst die Nockenflächen des Nockenflächenpaares entsprechend relativ zueinander verstellt werden, bevorzugt derart, dass die Schraubenmutter und das Ringelement den minimal möglichen Axialabstand zueinander einnehmen.

Bevorzugt ist es, wenn die erste Löseanschlagfläche und/oder die zweite Löseanschlagfläche eine größere Steigung aufweisen/aufweist als die Steigung der ersten und zweiten Nockenfläche.

Bevorzugt ist es, wenn die erste Löseanschlagfläche und/oder die zweite Löseanschlagfläche senkrecht zur Umfangsrichtung der Schraubenmutter orientiert sind/ist, dass die erste und/oder zweite Löseanschlagfläche also eine sich in radialer Richtung sowie in Achsrichtung erstreckende Ebene aufspannen.

Besonders zweckmäßig ist es, wenn die erste Festziehanschlagfläche und/oder die zweite Festziehanschlagfläche eine größere Steigung aufweisen/aufweist als die Steigung der ersten und zweiten Nockenfläche, oder dass die erste Festziehanschlagfläche und/oder die zweite Festziehanschlagfläche, zumindest näherungsweise, parallel zur axialen Einschraubrichtung ausgerichtet sind/ist, also eine sich in axialer sowie in radialer Richtung erstreckende Ebene aufspannen/aufspannt. Ganz besonders zweckmäßig ist es, wenn an der Schraubenmutter mehrere in Umfangsrichtung beabstandete erste Zinnen und an dem Ringelement in Umfangsrichtung über die ersten Zinnen beabstandete zweite Zinnen vorgesehen sind, wobei die ersten und zweiten Zinnen bevorzugt in axialer Richtung verzahnungsartig ineinandergreifen. Bevorzugt ist an zumindest einer der ersten Zinnen sowohl eine erste Festziehanschlagfläche zum Zusammenwirken mit einer zweiten Festziehanschlagfläche vorgesehen, die an einer in der Festziehrichtung benachbarten zweiten Zinnen des Ringelementes angeordnet ist, als auch eine erste Löseanschlagfläche zum Zusammenwirken mit einer zweiten Löseanschlagfläche einer weiteren, entgegen der Festziehrichtung benachbarten zweiten Zinne des Ringelementes.

Bevorzugt ist der Abstand zwischen der ersten Festziehanschlagfläche und einer ersten Löseanschlagfläche eines Nockenflächenpaares größer oder kleiner, beispielsweise größer, als der Abstand einer zweiten Festziehanschlagsfläche und einer zweiten Löseanschlagsfläche dieses Nockenflächenpaares, um so eine Relativverdrehbarkeit und somit ein Verspannen zu ermöglichen. Bevorzugt ist darauf zu achten, dass die ersten und zweiten Festziehanschlagflächen eines Paares von Anschlagflächen in der Festziehposition voneinander beabstandet sind.

Grundsätzlich ist es möglich, dass entweder nur an den unteren Stirnseiten der ersten Zinnen oder nur an den oberen Stirnseiten der zweiten Zinnen erste bzw. zweite Nockenflächen vorgesehen sind und die Gegennockenflächen jeweils in den Zinnenabständen bzw. Vertiefungen des gegenüberliegenden Bauteils. Gemäß einer alternativen Ausführungsvariante befinden sich sowohl an den unteren Stirnseiten der ersten Zinnen erste Nockenflächen, die zweite Nockenflächen des Ringelementes kontaktieren und gleichzeitig befinden sich an den oberen Stirnseiten der zweiten Zinnen zweite Nockenflächen, die mit ersten Nockenflächen der Schraubenmutter zusammenwirken.

Grundsätzlich ist es möglich, das Ringelement und die Schraubenmutter als separate Bauteile zu handhaben. Der Einbau bzw. der Sicherungsvorgang kann jedoch wesentlich erleichtert und fehlerfreier gestaltet werden, wenn das Ringelement unverlierbar an der Schraubenmutter angeordnet ist. Dies kann beispielsweise dadurch realisiert werden, dass das Ringelement mit seiner von der Schraubenmutter abgewandten (unteren) Seite auf einem Sicherungsring aufliegt, der das Ringelement unverlierbar an der Schraubenmutter sichert und der relativ verdrehbar sowohl zu der Schraubenmutter als auch zu dem Ringelement angeordnet ist. Alternativ ist es denkbar, das Ringelement durch unmittelbaren formschlüssigen Eingriff an der Schraubenmutter zu sichern, wobei auch hier auf eine zumindest teilweise Relativverdrehbarkeit zwischen Schraubenmutter und Ringelement zu achten ist. Im Falle des Vorsehens einer fakultativen Nockenscheibe kann diese mittels des Sicherungsrings oder des Ringelements zwischen Ringelement und Schraubenmutter gesichert werden.

Ganz besonders zweckmäßig ist es für den Fall des Vorsehens eines Sicherungsringes, wenn die Reibung zwischen dem Ringelement und dem Sicherungsring und/oder zwischen dem Sicherungsring und dem zu sichernden Bauteil, insbesondere der Radnabe reduziert ist, insbesondere mit dem Ziel eine möglichst geringe Krafteinwirkung bzw. Drehmomenteinwirkung des zu sichernden Bauteils auf das Ringelement sicherzustellen.

Dies kann beispielsweise dadurch realisiert werden, dass der Sicherungsring eine reibungsreduzierte, dem zu sichernden Bauteil zugewandte Unterseite und/oder eine reibungsreduzierte, dem Ringelement zugewandte Oberseite aufweist. Die Reibreduzierung kann beispielsweise durch das Vorsehen einer reibreduzierenden, ein- oder beidseitigen Beschichtung verwirklicht werden. Zusätzlich oder alternativ kann es sich bei dem Sicherungsring um ein gehärtetes Bauteil handeln, das sich durch eine reduzierte Haftreibung auszeichnet. Ganz besonders bevorzugt wird die Haftreibung des Sicherungsrings durch eine Nitrierung, d.h. Stickstoffanreicherung reduziert.

Ganz besonders bevorzugt ist eine Ausführungsvariante, bei der die mindestens eine erste Nockenfläche und die mindestens eine zweite Nockenfläche als Kugel-Pfannen-Paarung ausgebildet sind, also in der Art eines Kugel-Pfannen-Gelenks zusammenwirken, so dass die Schraubenmutter relativ zu dem Ringelement verschwenkbar ist, und zwar auf einem Flächenabschnitt einer gedachten Kugeloberfläche (Kalottenoberfläche), d.h. um den Mittelpunkt der diese Kugeloberfläche aufweisenden Kugel. Ganz besonders bevorzugt ist dabei eine Ausführungsform mit mehreren ersten Nockenflächen sowie mehreren zu den ersten Nockenflächen korrespondierenden zweiten Nockenflächen, wobei es noch weiter bevorzugt ist, wenn die ersten Nockenflächen und die zweiten Nockenflächen gleichmäßig in Umfangsrichtung verteilt angeordnet sind. Durch die gelenkartige Verschwenkbarkeit zwischen den ersten und den zweiten Nockenflächen können Toleranzen, insbesondere Planlauffehler bei der Montage der Befestigungsmittel automatisch ausgeglichen werden. Anders ausgedrückt wird durch die erfindungsgemäße Oberflächenkonturierung der ersten und zweiten Nockenflächen eine Selbstzentrierung erreicht bzw. die Befestigungsmittel, insbesondere das Ringelement und/oder der Sicherungsring werden so relativ zu den Achszapfen ausgerichtet, dass eine untere Planfläche der Befestigungsmittel, insbesondere des Ringelementes oder eines Sicherungsringes plan aufliegt auf dem zu sichernden Bauteil.

Die vorgenannte Kugel-Pfannen-Paarung kann auf zwei unterschiedliche Weisen erreicht werden. Gemäß einer ersten Alternative sind die ersten Nockenflächen konvex, d.h. kugelabschnittsförmig konturiert und die zweiten Nockenflächen korrespondierend konkav, d.h. pfannenartig. Gemäß einer zweiten Alternative sind die ersten Nockenflächen pfannenabschnittsförmig konturiert und die zweiten Nockenflächen kugelabschnittsförmig.

Anders ausgedrückt ist in Weiterbildung der Erfindung vorgesehen, die Schraubenmutter relativ zu dem Ringelement um einen gedachten Mittelpunkt verschwenkbar anzuordnen bzw. auszubilden, was dadurch erreicht wird, dass die ersten Nockenflächen als Flächenabschnitte einer gemeinsamen konvexen Kugelhüllkontur ausgeformt sind und die zweiten Nockenflächen als Flächenabschnitte einer gemeinsamen konkaven, zur Kugelhüllkontur korrespondierenden Pfannenhüllkontur, oder umgekehrt, d.h. dass die ersten Nockenflächen als Flächenabschnitte einer gemeinsamen konkaven Pfannenhüllkontur ausgeformt sind und die zweiten Nockenflächen als Flächenabschnitte einer gemeinsamen konvexen, zur Pfannenhüllkontur korrespondierenden Kugelhüllkontur.

Dabei ist mit Vorteil vorgesehen, dass sich der Radius der Kugelhüllkontur und der Radius der korrespondierenden Pfannenhüllkontur entsprechen - anders ausgedrückt entspricht der Radius der Kugelhüllkontur in Bezug auf einen gemeinsamen Mittelpunkt dem Radius der Pfannenhüllkontur in Bezug auf diesen Mittelpunkt.

In Weiterbildung der Erfindung sind Markierungsmittel vorgesehen, um komfortabel ein vorgegebenes Festziehdrehmoment von vorzugsweise mindestens 10Nm, weiter bevorzugt mindestens 20Nm, noch weiter bevorzugt mindestens 30Nm, noch weiter bevorzugt mindestens 40Nm einstellen zu können. Hierzu sind an den zusammenwirkenden Nockenflächenteilen, also entweder bei daran vorgesehenen Nockenflächen an der Schraubenmutter und dem Ringelement und bei der alternativen Ausführungsform an der fakultativen Nockenscheibe und dem Ringelement Markierungen vorgesehen, die in Umfangsrichtung zusammen mit dem die jeweilige Markierung tragenden Bauteil verstellbar sind, wobei die Markierungsposition jeweils so gewählt ist, dass wenn die Nockenflächenbauteile so relativ zueinander verstellt sind, insbesondere so, dass die Markierungen übereinanderliegen, d.h. miteinander fluchten bzw. an der gleichen Umfangsposition, d.h. am gleichen Umfangswinkel angeordnet sind, das vorgegebene (gewollte) Festziehdrehmoment erreicht ist.

In dieser Relativposition sind die ersten und zweiten Festziehanschlagflächen voneinander beabstandet, so dass ein gewünschtes Relativvergleiten der Nockenflächen zueinander möglich ist. Die Befestigungsmittel sind also scharf gestellt. Die Markierungen werden bevorzugt erst zueinander ausgerichtet, nachdem die Schraubenmutter mit einem vorgegebenen maximalen Drehmoment festgezogen wurde, wobei die ersten und zweiten Festziehanschlagflächen bei diesem vorgelagerten Festziehen aneinander anliegend zusammenwirken.

Das Vorsehen einer ersten und einer zweiten Markierung ermöglicht es, die endgültige Einstellung des Festziehdrehmoments ohne Drehmomentschlüssel vorzunehmen und/oder um in einem nachgelagerten Kontrollschritt kontrollieren zu können, ob die erste Markierung und die zweite Markierung übereinanderliegen bzw. korrekt relativ zueinander ausgerichtet sind und folglich das festgelegte bzw. vorgegebene Festziehdrehmoment erreicht ist.

Im Hinblick auf die konkrete Ausbildung der Markierungen gibt es unterschiedliche Möglichkeiten. Im einfachsten Fall handelt es sich um Markierungen aus einem aufgetragenen Lackmaterial oder einem sonstigen Beschichtungsmaterial. Bevorzugt ist jedoch eine Ausführungsvariante, bei der die Markierungen in das sie tragende Teil eingearbeitet sind, d.h. um Erhebungen oder Vertiefungen, insbesondere Aussparungen in der Schraubenmutter oder der fakultativen Nockenscheibe sowie in dem die zweiten Nockenflächen tragenden Ringelement.

Besonders bevorzugt ist in dem die mindestens eine erste Nockenfläche tragenden Bauteil eine erste Markierung eingekerbt, insbesondere beim Kaltfließpressen eingepresst bzw. durch einen Umformvorgang erzeugt, die eine größere Umfangsradialerstreckung aufweist, als eine darunter befindliche zweite Markierung im Ringelement, so dass die zweite Markierung durch die erste Markierung hindurch bei einer Betrachtung von oben zu erkennen ist.

Grundsätzlich ist es möglich, eine einzige erste Markierung und eine einzige zweite Markierung vorzusehen. Bevorzugt ist jedoch eine Ausführungsform, bei der mehrere erste und mehrere zweite, insbesondere gleichmäßig in Umfangsrichtung verteilt angeordnete Markierungen vorgesehen sind, um an mehreren Umfangspositionen die korrekte Festziehrelativposition der ersten und zweiten Nockenflächen zueinander ablesen zu können.

Bei einer bevorzugten Ausführungsform der selbstsichernden Befestigungsmittel mit einem Sicherungsring ist es bevorzugt, wenn die mindestens eine erste und die mindestens eine dieser zugeordnete zweite Markierung in einem von dem Sicherungselement ausgesparten Umfangsabschnitt vorgesehen sind. Anders ausgedrückt ist der fakultative Sicherungsring an mindestens einer Stelle in Umfangsrichtung ausgespart bzw. weist einen Fensterabschnitt auf, durch den hindurch die Markierungen zu erkennen sind. Bevorzugt setzt sich der Sicherungsring zu beiden Seiten beabstandet von den Markierungen auf der Höhenposition (Axialposition) der Markierungen in Umfangsrichtung fort.

Bevorzugt ist auch das die mindestens eine erste Markierung tragende Bauteil, insbesondere die Schraubenmutter oder die fakultativen Nockenscheibe im Bereich der ersten Markierung bzw. auf axialer Höhe der ersten Markierung umfangsseitig konisch konturiert, wobei die Radialerstreckung nach radial außen im Bereich der ersten Markierung geringer ist als die Radialerstreckung des angrenzenden Ringelementes. Bevorzugt gehen die Konusfläche der Schraubenmutter oder der Nockenscheibe über in eine die zweite Markierung aufweisende Konusfläche des Sicherungsrings.

Die Erfindung betrifft auch eine Befestigungsanordnung mit nach dem Konzept der Erfindung ausgebildeten Befestigungsmitteln. Die Befestigungsanordnung umfasst einen Achszapfen eines Kraftfahrzeugs, wobei an dem Achszapfen ein Außengewinde zum Verschrauben mit der Schraubenmutter der Befestigungsmittel vorgesehen ist. Als zu sicherndes Bauteil ist eine Radnabe vorgesehen, die an dem Achszapfen festgelegt ist, insbesondere derart, dass die Verbindung in Umfangsrichtung spielbehaftet ist. Hierzu kann beispielsweise eine Keilverzahnung eingesetzt werden. Durch die nach dem Konzept der Erfindung ausgebildeten, selbstsichernden Befestigungsmitteln ist ein unbeabsichtigtes Lösen der auf den Achszapfen aufgesteckten Radnabe nicht möglich, da für den Fall einer Relativverstellbewegung der Radnabe zusammen mit dem Ringelement entgegen der Festziehrichtung der Schraubenmutter aufgrund der erfindungsgemäßen Steigungsanordnung der Nockenflächen eine erhöhte Spannung zwischen Schraubenmutter und Ringelement und damit ein erhöhter Druck des Ringelementes in Richtung Radnabe resultiert, wodurch diese gesichert wird bzw. die Verbindung noch verstärkt wird. Ein Formschluss zwischen den Befestigungsmitteln und den Achszapfen als Verdrehsicherung ist nicht notwendig und bevorzugt nicht vorgesehen.

Die Erfindung führt zudem auf ein Verfahren zum Sichern eines zu sichernden Bauteils, insbesondere zum Herstellen einer zuvor beschriebenen Befestigungsanordnung. Hierzu werden die nach dem Konzept der Erfindung ausgebildeten Befestigungsmittel auf ein Außengewinde, vorzugsweise auf ein Außengewinde eines Achszapfens eines Kraftfahrzeugs, aufgeschraubt und dabei in eine Festziehrichtung (Festziehumfangsrichtung) verdreht, wodurch die Schraubenmutter in axialer Richtung, d.h. in axialer Einschraubrichtung auf das zu sichernde Bauteil, insbesondere die Radnabe zu bewegt wird. Dabei nimmt die Schraubenmutter oder die fakultative Nockenscheibe das Ringelement über mindestens ein Festziehanschlagflächenpaar mit. Das Verdrehen in der Festziehrichtung wird bevorzugt so lange, kontinuierlich oder in Etappen durchgeführt, bis ein erstes, z.B. maximales, Festzieh-Drehmoment erreicht wird, beispielsweise 330Nm.

Daraufhin wird die Schraubenmutter ein kleines Stück weit, insbesondere maximal soweit, dass eine erste Löseanschlagfläche der Schraubenmutter an eine dieser zugeordneten zweiten Löseanschlagfläche anschlägt ohne das Ringelement mitzunehmen oder bevorzugt die zweite Löseanschlagfläche noch nicht erreicht, gelöst, so dass die mindestens eine erste Nockenfläche ein (kleines) Stück entlang der zweiten Nockenfläche entgegen der Festziehrichtung wandern kann. Hierdurch wird die Vorspannung zwischen Schraubenelement und Ringelement etwas (bevorzugt nicht auf Null) reduziert. Nach diesem Schritt kann das Festziehen bzw. "Scharfstellen" beendet sein.

Alternativ kann dem partiellen Lösevorgang die Schraubenmutter in Weiterbildung der Erfindung wieder in die Festziehrichtung kontinuierlich oder in Etappen verdreht bis ein zweites Festziehdrehmoment erreicht ist, das größer ist, vorzugsweise deutlich größer ist als das erste Festzieh-Drehmoment. Bevorzugt ist das zweite Festzieh-Drehmoment um mindestens 10Nm, vorzugsweise 20Nm, noch weiter bevorzugt mindestens 30Nm, noch weiter bevorzugt mindestens 40Nm größer als das erste Festzieh-Drehmoment. Ganz besonders beträgt das zweite Festzieh-Drehmoment zumindest näherungsweise, 380Nm.

Ganz besonders bevorzugt wird das Festziehen beendet, bevor die erste und die zweite Festziehanschlagfläche aneinanderstoßen, so dass im festgezogenen Zustand ein Abstand zwischen diesen eingehalten wird, wodurch sich die Befestigungsmittel bei Kraftbeaufschlagung des Ringelementes in Löserichtung selbst vorspannen können.

Das zuvor erläuterte erfindungsgemäße Verfahren kann dadurch wesentlich erleichtert werden, dass die beiden jeweils mindestens eine Nockenfläche tragenden Bauteile mit jeweils mindestens einer Markierung versehen sind, wobei die beiden Markierungen so angeordnet sind, dass diese, wenn sie sich in einer vorgegebenen Relativposition, insbesondere in der gleichen Umfangsposition befinden, d.h. miteinander fluchten eine bevorzugte Festziehrelativposition bzw. ein bevorzugtes, vorgegebenes Festdrehmoment markieren.

Bevorzugt werden die Befestigungsmittel wie zuvor beschrieben, insbesondere mittels eines Drehmomentschlüssels zunächst so fixiert, bis ein erstes, z.B. maximales, Festzieh-Drehmoment erreicht wird, beispielsweise die vorerwähnten 330Nm.

Daraufhin wird die Schraubenmutter ein Stück weit wieder gelöst und zwar so weit, dass die erste und die zweite Markierung sich überdecken.

In dieser Position sind die erste und die zweite Festziehanschlagfläche voneinander beabstandet, ebenso wie eine erste und eine zweite Löseanschlagsfläche. Für den Fall, dass die Mutter beim Lösen zu weit gelöst wird, müssen die Markierungen einfach wieder korrekt ausgerichtet werden.

In Weiterbildung der Erfindung ist mit Vorteil vorgesehen, dass nach dem Verringern der Spannung die Schraubenmutter wieder in die Festziehrichtung verdreht wird und zwar mit einem zweiten Festzieh-Drehmoment, das größer ist, vorzugsweise mindestens 10 Nm größer ist, als das erste Festzieh-Drehmoment, so dass die Spannung zwischen Schraubenelement und Ringelement wieder erhöht wird, vorzugsweise nicht bis zu einem durch Wechselwirkung der Nockenflächen maximal möglichen Wert.

In Weiterbildung der Erfindung ist mit Vorteil weiter vorgesehen, dass bei Erreichen eines vorgegebenen Festzieh-Drehmomentes eine erste Markierung der Schraubenmutter oder der fakultativen Nockenscheibe auf derselben Umfangsposition angeordnet ist, wie eine zweite Markierung des Ringelementes, wobei vorzugsweise in dieser Relativposition die erste und die zweite Festziehanschlagsfläche voneinander in Umfangsrichtung beabstandet sind.

Ganz besonders bevorzugt ist eine Ausführungsvariante, bei welcher das die zweite Markierung tragende Nocken-Bauteil, also das Ringelement, das die erste Markierung tragende Bauteil, also die Schraubenmutter oder die fakultative Nockenscheibe in radialer Richtung überragt, um ein erleichtertes Ablesen zu ermöglichen. Dabei ist es besonders zweckmäßig, wenn das Ringelement zumindest in einem die zweite Markierung tragenden Abschnitt konisch konturiert ist, also sich schräg nach unten verbreitert.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Schnittansicht von mehrteiligen Befestigungsmitteln entlang der Schnittlinie C - C gemäß Fig. 2,
- Fig. 2:: eine Draufsicht auf die Befestigungsmittel gemäß Fig. 1 von oben in eine axiale Einschraubrichtung,
- Fig. 3:: ein Detail A aus Fig. 1,
- Fig. 4:: eine perspektivische Schrägansicht der Befestigungsmittel von außen,
- Fig. 5:: eine vergrößerte Darstellung der Befestigungsmittel gemäß den Fig. 1 bis 4 in einer äußeren Seitenansicht,
- Fig. 6:: eine Darstellung einer Befestigungsanordnung, umfassend einen Achszapfen, an dem über eine Keilverzahnung eine Radnabe festgelegt ist, die über die in den Fig. 1 bis Fig. 5 gezeigten Befestigungsmitteln gegen unbeabsichtigtes Lösen gesichert ist, ohne dass ein Verdrehsicherungsformschluss zwischen den Befestigungsmitteln und dem Achszapfen realisiert ist,
- Fig. 7a bis Fig. 7d: unterschiedliche Ansichten, Schnitte und Detailansichten von selbstsichernden Befestigungsmitteln, umfassend eine Schraubenmutter sowie ein Ringelement,
- Fig. 8a und Fig. 8b: unterschiedliche, teilweise vergrößerte Schnittansichten eines Schraubenelementes,
- Fig. 9a und Fig. 9b: unterschiedliche Ansichten und vergrößerte Detaildarstellungen eines zu der Schraubenmutter gemäß Fig. 8a und 8b korrespondierenden Ringelementes,
- Fig. 10a und Fig. 10b: unterschiedliche, teilweise vergrößerte Ansichten der Schraubenmutter gemäß den Fig. 8a und 8b,
- Fig. 11a und Fig. 11b: unterschiedliche Ansichten und Detailvergrößerungen des Ringelementes gemäß den Fig. 9a und 9b,
- Fig. 12a bis Fig. 12g: unterschiedliche Ansichten von Befestigungsmitteln, die ein Nockenscheibenpaar umfassen,
- Fig. 13a bis Fig. 13d: unterschiedliche, teilweise geschnittene Ansichten und Detailansichten einer Ausführungsform von Befestigungsmitteln mit einem unmittelbar an der Schraubenmutter anliegenden Sicherungselement, wobei auf der Schraubenmutter eine erste Markierung und auch an dem Ringelement eine zweite Markierung vorgesehen ist,
- Fig. 14a bis Fig. 14c: unterschiedliche, teilweise geschnittene Ansichten von alternativen Befestigungsmitteln mit Markierungen und konisch konturiertem Ringelement,
- Fig. 15a bis Fig. 15d: unterschiedliche, teilweise geschnittene Ansichten und Detailausschnitte von weiteren relativen Befestigungsmitteln, bei denen zusätzlich zur Schraubenmutter eine die ersten Nockenflächen aufweisende Nockenscheibe vorgesehen ist, die in Wechselwirkung tritt mit einem Ringelement, wobei an dem Ringelement und der Nockenscheibe Markierungen vorgesehen sind,
- Fig. 16a bis Fig. 16c: Darstellungen einer Paarung aus Nockenscheibe und Ringelement zum Zusammenwirken mit einer nicht dargestellten Schraubenmutter, wobei Markierungen in Form von seitlichen Einkerbungen mit unterschiedlichen Krümmungsradien vorgesehen sind,
- Fig. 17a bis Fig. 17c: eine alternative Nockenscheiben-Ringelementpaarung mit linienförmigen Einkerbungen als Markierungen, wobei sich die Markierungen der Nockenscheibe und des Ringelementes nicht unterscheiden,
- Fig. 18a bis Fig. 18d: eine weitere alternative Nockenscheiben-Ringelementpaarung, wobei hier das Ringelement konisch konturiert ist.

In den Figuren sind gleiche Elemente und Elemente mit der gleichen Funktion mit den gleichen Bezugszeichen gekennzeichnet.

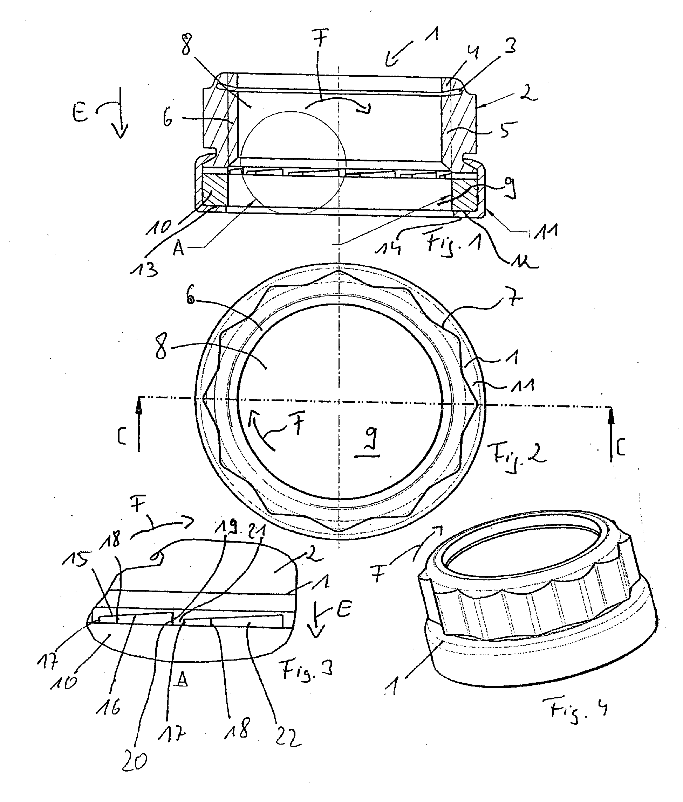

In den Fig. 1 bis 6 sind selbstsichernde Befestigungsmittel 1 gezeigt. Diese umfassen eine Schraubenmutter 2 mit Bremsmomentmitteln 3 in Form von zwei Innengewindeabschnitten 4, 5 eines Innengewindes 6, die derart axial voneinander beabstandet und relativ zueinander federnd angeordnet sind, dass beim Verschrauben der Schraubenmutter 2 mit einem Außengewinde ein Bremsmoment resultiert. Hinsichtlich des Aufbaus und der Funktionsweise wird auf die WO 2007/076968 A1 verwiesen.

Die Schraubenmutter 2 umfasst an ihrem Außenumfang einen als Vielkantantrieb ausgebildeten Antrieb zum Zusammenwirken mit einem Werkzeug - alternativ ausgestaltete Antriebe, beispielsweise mit parallelen Schlüsselflächen, etc. sind ebenfalls realisierbar.

Das Innengewinde 6 begrenzt den Innenumfang einer Durchgangsöffnung 8, die in axialer Richtung mit einer ebenfalls als Durchgangsöffnung ausgebildeten Durchstecköffnung 9 eines der Schraubenmutter 2 zugeordneten Ringelementes 10 fluchtet. Die Durchstecköffnung 9 ist innengewindefrei ausgestaltet, jedenfalls derart, dass das Ringelement 10 nicht in verschraubende Wechselwirkung mit dem dem Innengewinde 6 zugeordneten Außengewinde treten kann.

Das Ringelement 10 ist mit Hilfe eines von einem Außengewinde mit Radialabstand durchsetzten Sicherungsrings 11 unverlierbar an der Schraubenmutter 2 gehalten. Das Ringelement 10 stützt sich mit einer Unterseite 12 auf einer oberen, ringförmigen Oberseite 13 des Sicherungsrings 11 ab, welcher sich im bestimmungsgemäßen Zustand mit seiner Unterseite 14 bevorzugt auf dem zu sichernden Bauteil abstützt. Bei einer alternativen, nicht dargestellten Ausführungsvariante kann entweder das Ringelement 10 gleichzeitig als Sicherungsring ausgebildet und formschlüssig zum axialen Sichern mit der Schraubenmutter 2 verbunden sein. Weiter alternativ kann auf Sicherungsmittel zum axialen Sichern des Ringelementes 10 am Schraubenelement 2, d.h. zum unverlierbaren Halten vollständig verzichtet werden.

Wie sich aus der Detaildarstellung gemäß Fig. 3 ergibt, weist die Schraubenmutter 2 an einer unteren, dem Ringelement 10 zugewandten Stirnseite erste, in Umfangsrichtung voneinander beabstandete, als schräge Rampen ausgebildete Nockenflächen 15 auf, die jeweils mit einer zweiten Nockenfläche 16 des Ringelementes 10 zusammenwirken. Zu erkennen ist, dass die ersten und zweiten Nockenflächen 15, 16 die gleiche Steigung aufweisen. Die Nockenflächen 15, 16 steigen, in der Festziehrichtung F betrachtet entgegen der axialen Einschraubrichtung E an, erstrecken sich also in der Festziehrichtung schräg entgegen der Einschraubrichtung E, so dass sich das Ringelement 10 und die Schraubenmutter 2 bei fixierten Befestigungsmitteln 11, wenn das Ringelement entgegen der Festziehrichtung F kraftbeaufschlagt wird, sich in Umfangsrichtung relativ zueinander bewegen, derart, dass Schraubenmutter 2 und Ringelement 10 stärker gegeneinander verspannt werden.

Die Steigungen der ersten und zweiten Nockenflächen 15, 16 sind dabei von der Steigungsrichtung her der Innengewindesteigung des Innengewindes 6 entgegengesetzt. Zudem ist die Steigung der Nockenflächen 15, 16 bevorzugt dreibis viermal größer als die Innengewindesteigung des Innengewindes 6 der Schraubenmutter 2.

Jedem aus einer ersten und einer zweiten Nockenfläche 15, 16 bestehenden Nockenflächenpaar (zumindest jedoch einem Nockenflächenpaar) ist ein Festziehanschlagflächenpaar zugeordnet, umfassend eine erste, schraubenmutterseitige erste Festziehanschlagfläche 17, die bevorzugt die die ihr zugeordnete erste Nockenfläche 15 entgegen der Festziehrichtung F begrenzt.

Der ersten Festziehanschlagfläche 17 liegt in Festziehrichtung F gegenüber eine zweite Festziehanschlagfläche 18, die die erste Festziehanschlagfläche 17 beim Festziehen der Schraubenmuter 2 mittels eines mit dem einzigen Antrieb 7 zusammenwirkenden Werkzeugs in die Festziehrichtung F mitnehmen kann, nachdem die ersten Nockenfläche 15 soweit entlang der ihr zugeordneten zweiten Nockenfläche 16 in Umfangsrichtung verdreht wurde, bis erste und zweite Festziehanschlagflächen 17, 18 aneinanderstoßen bzw. aneinander anliegen, wobei in diesem Zustand die Schraubenmutter 2 und das Ringelement 10 (abschnittsweise) maximal weit axial voneinander beabstandet sind. Bei dem gezeigten Ausführungsbeispiel erstrecken sich die Festziehanschlagflächen 17, 18 in axialer sowie in radialer Richtung.

Ferner ist zu erkennen, dass bei dem gezeigten Ausführungsbeispiel jedem Nockenflächenpaar, bevorzugt zumindest einem der Nockenflächenpaare ein Löseanschlagflächenpaar zugeordnet ist, umfassend eine schraubenmutterseitige erste Löseanschlagfläche 19 und eine dieser entgegen der Festziehrichtung F gegenüberliegende, ringelementseitige zweite Löseanschlagfläche 20. Die Löseanschlagflächen 19, 20 sind parallel zu den Festziehanschlagflächen 17, 18 ausgerichtet und begrenzen in Festziehrichtung die erste bzw. zweite Nockenfläche 15, 16. In der in Fig. 3 gezeigten Relativposition, bei der die erste Löseanschlagfläche 19 an der zweiten Löseanschlagfläche 20 anliegt, kann die Schraubenmutter 2, genauer die erste Löseanschlagfläche 19 das Ringelement 10, genauer die ihr zugeordnete zweite Löseanschlagfläche 20 entgegen der Festziehrichtung F mitnehmen.

Aus Fig. 3 ergibt sich weiterhin, dass an der Schraubenmutter erste, sich in Richtung Ringelement 10 erstreckende Zinnen 21 und an dem Ringelement 10 zweite Zinnen 22 angeordnet sind, wobei die zweiten Zinnen 22 in die Abstände zwischen den ersten Zinnen 21 in axialer Richtung verzahnungsartig eingreifen. Die ersten Zinnen 21 weisen in dem gezeigten Ausführungsbeispiel keine ersten Nockenflächen auf, ebenso weisen die den ersten Zinnen 21 zugeordneten Umfangsabschnitte zwischen zwei zweiten Zinnen 22 keine zweiten Nockenflächen auf. Die zweiten Zinnen 22 tragen stirnseitig die zweiten Nockenflächen 16, die mit den ersten Nockenflächen 15 zusammenwirken, die in den Umfangsabschnitten zwischen zwei ersten Zinnen 21 an der Schraubenmutter 2 ausgebildet sind. Eine umgekehrte Konfiguration mit nockenflächenfreien zweiten Zinnen und Nockenflächen aufweisenden ersten Zinnen ist alternativ realisierbar.

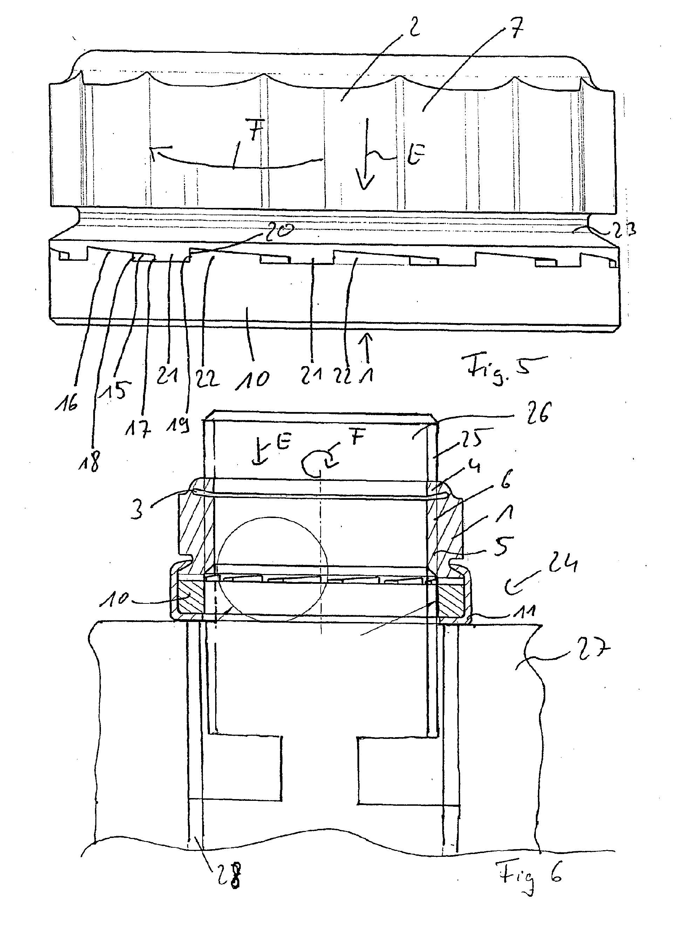

Anhand von Fig. 5 wird im Folgenden die Wirkungsweise der speziellen Konfiguration der Befestigungsmittel 1 nochmals im Detail erläutert. Zu erkennen ist die Schraubenmutter 2 mit ihrem umfänglichen Antrieb 7 für ein Werkzeug sowie den auf der unteren Stirnseite vorgesehenen ersten Nockenflächen 15, die in zweite Nockenflächen 16 eines Ringelementes 10 eingreifen, d.h. mit diesem zusammenwirken. Ganz wesentlich ist, dass die ersten und/oder zweiten Nockenflächen 15, 16, hier beide Arten von Nockenflächen 15, 16 in der Festziehrichtung F betrachtet entgegen der axialen Einschraubrichtung E in der die Schraubenmutter 2 beim Festziehen in Richtung zu sicherndem Bauteil bewegt wird, ansteigen und zwar bevorzugt mit einer Steigung die größer ist als die, bevorzugt entgegengesetzte Steigung des Innengewindes der Schraubenmutter 2.

Zu erkennen ist, dass die Schraubenmutter 2 eine Umfangsnut 23 aufweist, in die der Sicherungsring 11 (vgl. Fig. 1) in radialer Richtung formschlüssig eingreifen kann um diesen gegen axiales Verlieren zu sichern - alternativ kann beispielsweise das Ringelement 10 in die Umfangsnut 23 eingreifend ausgebildet sein. Andere axiale Sicherungsmittel sind alternativ realisierbar, wenn gewünscht.

Aus Fig. 5 ist zu erkennen, dass erste Zinnen 21 in die Abstände zwischen in Umfangsrichtung benachbarten, zweite Nockenflächen 16 tragende Zinnen 22 eingreifen. Jede erste Zinne 21 (bevorzugt zumindest jedoch eine der ersten Zinnen 21) weist sowohl eine erste Festziehanschlagfläche 17 als auch eine entgegen der Festziehrichtung F beabstandete erste Löseanschlagfläche 19 auf.

Die erste Festziehanschlagfläche 17 dieser bevorzugt mindestens einen ersten Zinne 21 (die bei einer alternativen Ausführungsvariante auch eine erste Nockenfläche 15 tragen kann) wirkt zusammen mit einer in Festziehrichtung F beabstandeten zweiten Festziehanschlagfläche 18 eines (ersten) Nockenflächenpaares und die erste Löseanschlagfläche 19 wirkt zusammen mit einer entgegen der Festziehrichtung F benachbarten zweiten Löseanschlagfläche 20 eines (zweiten) Nockenflächenpaares, welches in über die erste Zinne 21 entgegen der Festziehrichtung F beabstandet ist von dem ersten Nockenflächenpaar.

Wird das Ringelement 10 im fixierten Zustand der Befestigungsmittel 11, beispielsweise unmittelbar durch das zu sichernde Bauteil oder beispielsweise mittelbar über den fakultativen Sicherungsring 11 entgegen der Festziehrichtung F der Schraubenmutter 2 kraftbeaufschlagt, so wandern die zweiten Nockenflächen 16 relativ zu den ersten Nockenflächen 15 entgegen der Festziehrichtung F, was bewirkt, dass die Vorspannung zwischen Ringelement 10 und Schraubenmutter 2 ansteigt, solange zum Zeitpunkt der Kraftbeaufschlagung des Ringelementes 10 die ersten Festziehanschlagflächen 17 von den zweiten Festziehanschlagflächen 18 in Umfangsrichtung beabstandet sind. Beim Festziehen bzw. Festlegen der Befestigungsmittel 1 sollte darauf geachtet werden, dass dieser Abstand zwischen der mindestens einen ersten Festziehanschlagfläche 17 und der ihr zugeordneten zweiten Festziehanschlagfläche 18 im festgezogenen Zustand eingehalten wird bzw. vorliegt. Hierzu kann die mindestens eine erste Löseanschlagfläche 19 an der ihr zugeordneten mindestens einen zweiten Löseanschlagfläche 20 anliegen oder etwas, jedoch bevorzugt keinesfalls maximal in Umfangsrichtung von dieser beabstandet sein. Um dies zu erreichen wird die Schraubenmutter nach dem Erreichen eines ersten Festziehdrehmoments wieder etwas gelöst und dann nur soweit mit einem zweiten Festziehdrehmoment festgezogen, dass die ersten und zweiten Festziehanschlagflächen sich (noch) nicht berühren.

Die Umfangserstreckung der ersten und der zweiten Nockenfläche 15, 16 sollte so aufeinander abgestimmt sein, dass eine Relativverstellbewegung von Schraubenmutter 2 und Ringelement 10 über einen Umfangsabschnitt möglich ist, um das Vorspannen zu ermöglichen.

In Fig. 6 ist eine Befestigungsanordnung 24 gezeigt, die wie zuvor beschrieben ausgebildete Befestigungsmittel 1 umfasst. Diese sind mit einem Außengewinde 25 verschraubt, welches in dem gezeigten Ausführungsbeispiel - jedoch nicht zwingend - an einem Achszapfen 26 eines Kraftfahrzeugs angeordnet ist. Hierbei wirkt das Außengewinde 25 mit dem Innengewinde 6, d.h. konkret bei dem gezeigten Ausführungsbeispiel mit den Innengewindeabschnitten 4, 5 zusammen, derart, dass von den Bremsmomentmitteln 3 beim Verschraubvorgang ein Bremsmoment bewirkt wird.

Die Befestigungsmittel 1 stützen sich über den fakultativen Sicherungsring 11 an dem zu sichernden Bauteil 27, hier einer Radnabe, ab. Alternativ stützt sich das Ringelement 10 ohne Zwischenanordnung eines Sicherungsrings 11 an den zu sichernden Bauteil 27 in axialer Richtung ab. Das zu sichernde Bauteil 27 ist, in dem gezeigten Ausführungsbeispiel über eine Keilverzahnung 28 spielbehaftet drehfest mit dem Achszapfen 26, genauer einer unteren Gegenverzahnung des Achszapfens 26 verbunden. Das Befestigungsmittel 11 befindet sich in einer Fixierposition in der eine geringe Relativbewegung des Ringelementes 10 zu der Schraubenmutter 2 entgegen der Feststellrichtung 11 möglich ist.

Wird das Ringelement 10, beispielsweise durch entsprechende Verschiebungen bzw. Bewegungen im Betrieb der Befestigungsanordnung, über das zu sichernde Bauteil 27, insbesondere die Radnabe, die aufgrund der spielbehafteten Keilverzahnung 28 leicht etwas in Umfangsrichtung hin- und herbewegbar ist, entgegen der Festziehrichtung F mitgenommen, wandern die ersten Nockenflächen 15 so relativ entlang der zweiten Nockenflächen 16, dass die Schraubenmutter 2 und das Ringelement 10 bestrebt sind sich in axialer Richtung voneinander weg zu bewegen, wodurch die Vorspannung zwischen dem Ringelement 10 und der Schraubenmutter 2 steigt, da sich die Schraubenmutter 2 in axialer Richtung über ihr Innengewinde 6 am Außengewinde 26 abstützt.

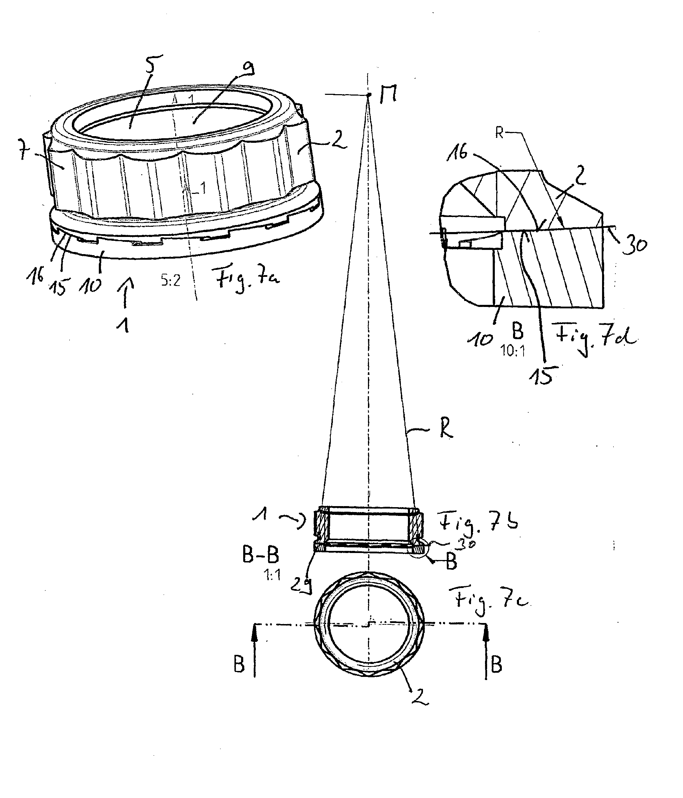

Im Folgenden wird anhand der Fig. 7a bis 11b ein besonders bevorzugtes Ausführungsbeispiel von Befestigungsmitteln 1 beschrieben.

Diese zeichnen sich dadurch aus, dass die Schraubenmutter 2 und das Ringelement 10 in der Art eines Kugel-Pfannen-Gelenks zusammenwirken, so dass Planlauffehler automatisch ausgeglichen werden bzw. dass sich die Schraubenmutter axial in Bezug auf ein nicht dargestelltes Außengewinde zum Verschrauben mit der Schraubenmutter bei der Montage ausrichten kann. In dem gezeigten Ausführungsbeispiel ist aus Übersichtlichkeitsgründen kein fakultativer Sicherungsring 11 vorgesehen bzw. gezeigt, der das Ringelement 10 unverlierbar an der Schraubenmutter 2 hält. Für den Fall des Vorsehens eines solchen, bevorzugten Sicherungsrings ist dieser so auszulegen, dass er eine Relativverschwenkbewegung der Schraubenmutter relativ zu dem Ringelement auf der später noch zu erläuternden, gedachten Kugeloberfläche zulässt. In den gezeigten Ausführungsbeispielen bildet die Schraubenmutter, genauer die ersten Nocken einen Teilflächenabschnitt bzw. Teilflächenabschnitte einer Kugel, d.h. sie sind konvex konturiert und die mit den ersten Nockenflächen zusammenwirkenden zweiten Nockenflächen sind in der Folge konkav gewölbt, d.h. als Pfannenabschnittsflächen ausgebildet. Selbstverständlich ist auch die umgekehrte Ausführungsform realisierbar, d.h. eine Ausführungsform bei der die Pfanne von den ersten Nockenflächen und die Kugel bzw. der Kugelausschnitt von den zweiten Nockenflächen gebildet ist.

In Fig. 7a sind die selbstsichernden Befestigungsmittel 1 in einer perspektivischen Schrägseitenansicht gezeigt. Zu erkennen ist eine Schraubenmutter 2 mit Antrieb 7 sowie ein axial benachbart dazu angeordnetes, antriebsfreies Ringelement 10. Die Schraubenmutter 2 weist eine Durchgangsöffnung 8 auf, die mit einer Durchstecköffnung 9 des Ringelementes fluchtet.

Am Innenumfang der Schraubenmutter 2 ist ein Innengewinde (Innengewindeabschnitt) 5 ausgebildet, wohingegen das Ringelement 10 innengewindefrei ist.

Die Schraubenmutter 2 wirkt über stirnseitige erste Nockenflächen 15 mit korrespondierenden zweiten Nockenflächen 16 des Ringelementes 10 in der zuvor anhand der vorhergehenden Ausführungsbeispiele beschriebenen Art und Weise zusammen. Im Hinblick auf die Neigung bzw. die Steigungsrichtung und Anordnung der Nockenflächen 15, 16 wird auf vorstehende Ausführungsbeispiele mit zugehöriger Figurenbeschreibung verwiesen.

In Fig. 7b ist eine Schnittansicht entlang der Schnittlinie B-B gemäß Fig. 7c gezeigt. Zu erkennen ist, dass eine Berührungsfläche (Kontaktfläche) 29 der ersten und zweiten Nockenflächen 15, 16 auf einer gedachten Kugeloberfläche 30 angeordnet sind, welche einen Radius R um einen Mittelpunkt M aufweist. Hierdurch kann sich die Schraubenmutter 2 relativ zu dem Ringelement 10 auf dieser Kugeloberfläche 30 ausrichten bzw. relativ zu dem Ringelement 10 verschwenken.

Besonders deutlich wird dies anhand der Detailvergrößerung B gemäß Fig. 7d. Dort ist ein Ausschnitt der Kugeloberfläche 30 gezeigt, auf der Schraubenmutter 2 und Ringelement 10 relativ zueinander in der Art eines Kugel-Pfannen-Gelenks verschwenkbar sind.

In Fig. 7d ist ein Ausschnitt einer ersten Nockenfläche 15 gezeigt, die mit einer korrespondierenden zweiten Nockenfläche 16 zusammenwirkt. Zu erkennen ist die konvexe Ausformung der ersten Nockenfläche 15 der Schraubenmutter 2 und die korrespondierende konkave Ausformung der zugehörigen zweiten Nockenfläche 16 des Ringelementes 10, wodurch Schraubenmutter 2 und Ringelement 10, genauer die ersten Nockenflächen 15 und die zweiten Nockenflächen 16 in der Art eines Kugel-Pfannen-Gelenkes zusammenwirken. In dem gezeigten Ausführungsbeispiel sind die ersten Nockenflächen als Flächenabschnitte einer gemeinsamen konvexen Kugelhüllkontur ausgeformt und die zweiten Nockenflächen 16 als Flächenabschnitte einer gemeinsamen konkaven, zu der vorgenannten Kugelhüllkontur korrespondierenden Pfannenhüllkontur ausgeformt, so dass die Schraubenmutter 2 relativ zu dem Ringelement 10 um den in Fig. 7b gezeigten Mittelpunkt der Kugelhüllkontur sowie der Pfannenhüllkontur verschwenkbar sind.

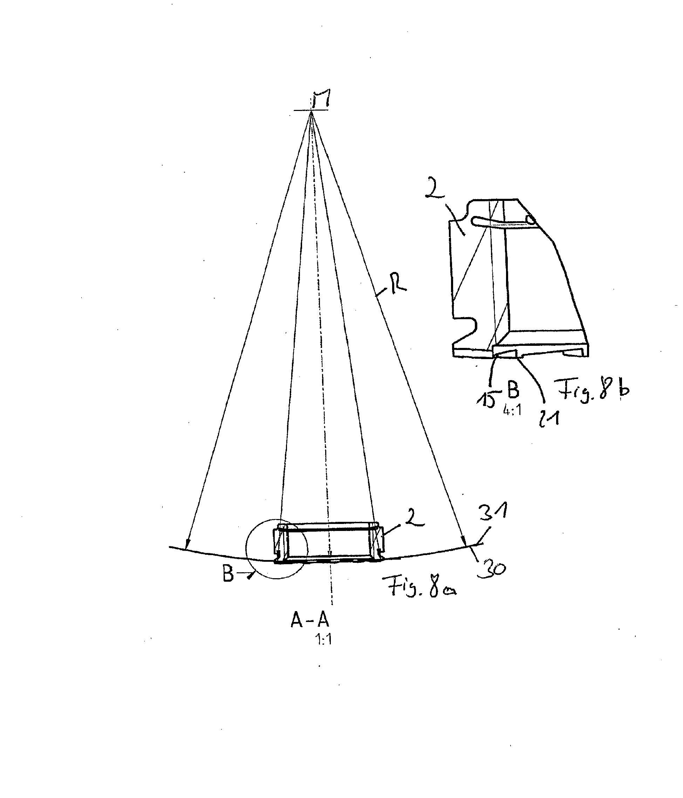

In Fig. 8a ist die Schraubenmutter 2 in einer geschnittenen Darstellung gezeigt. Eingezeichnet ist die Kugelhüllkontur 31 mit ihrem Radius R um den Mittelpunkt M.

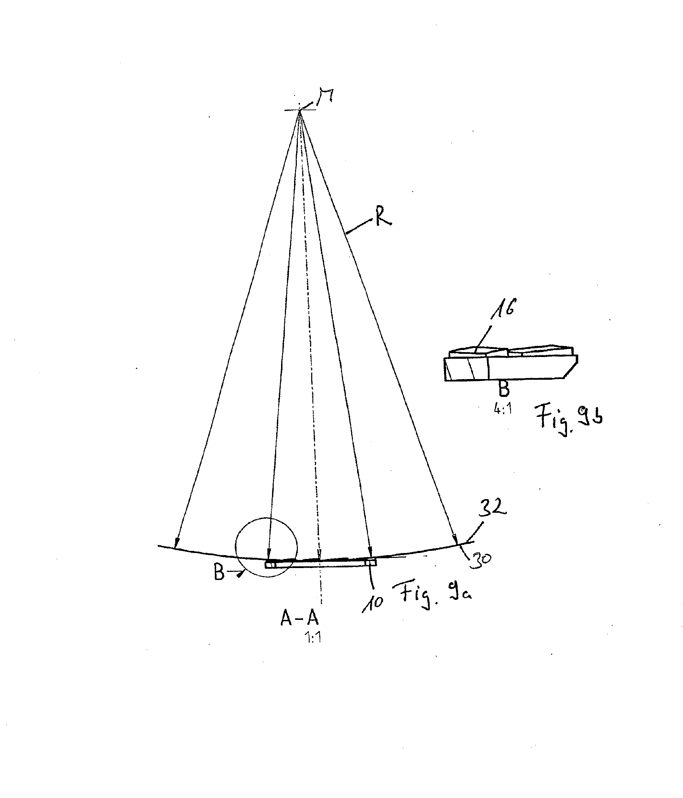

In den Fig. 9a und 9b ist das zur Schraubenmutter 2 gemäß den Fig. 8a und 8b korrespondierende Ringelement 10 gezeigt. Zu erkennen ist, dass die zweiten Nockenflächen 16 als Flächenabschnitte einer Pfannenhüllkontur 32 ausgeformt sind, die den gleichen Radius R aufweist, wie die Kugelhüllkontur 31 gemäß Fig. 8a.

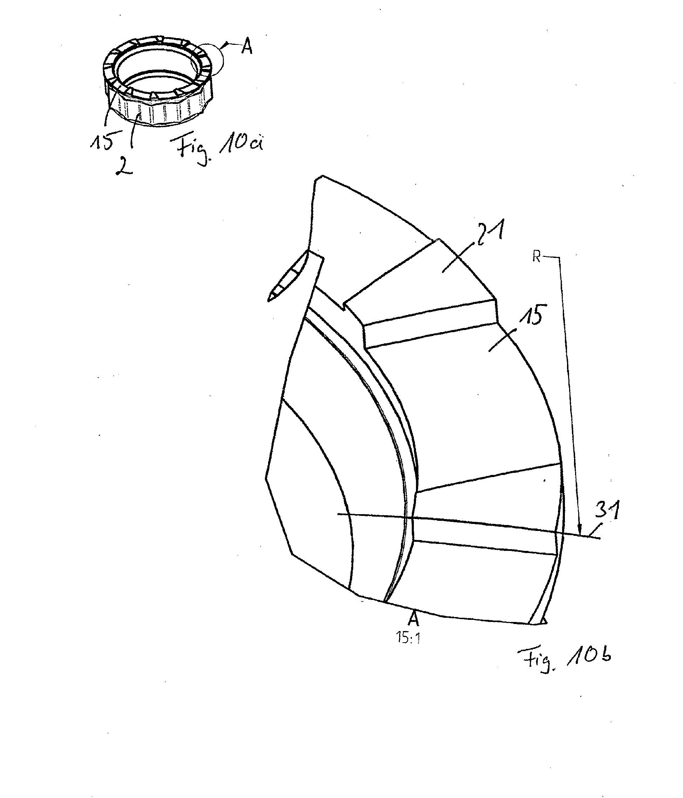

In Fig. 10a ist die Schraubenmutter 2 in einer Schrägansicht auf die dem nicht dargestellten Ringelement zugewandte untere Stirnseite gezeigt. Zu erkennen sind die ersten Nockenflächen 15, die in der Festziehrichtung betrachtet entgegen der axialen Einschraubrichtung ansteigen. Diese Steigung ist überlagert von der in Fig. 10b angedeuteten konvexen Kugelhüllkontur 31, die ein Zusammenwirken mit den zweiten Nockenflächen in der Art eines Kugel-Pfannen-Gelenks ermöglichen.

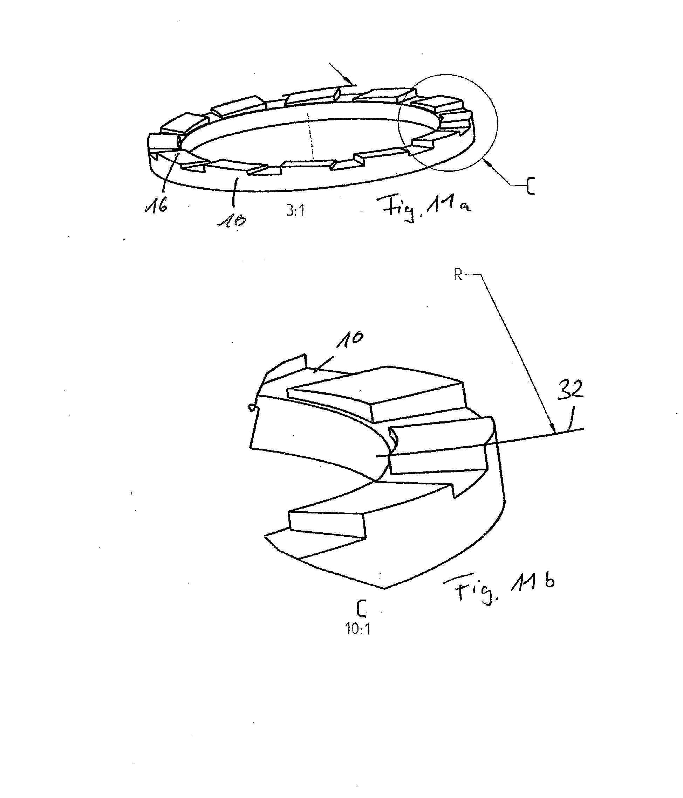

In den Fig. 11 a und 11 b ist das zu der Schraubenmutter 2 gemäß den Fig. 10a und 10b korrespondierende Ringelement 10 mit seinen zweiten Nockenflächen 16 gezeigt. Zu erkennen ist die in Fig. 11b angedeutete Pfannhüllkontur 32, die mit der Kugelhüllkontur 31 der ersten Nockenflächen 15 korrespondiert.

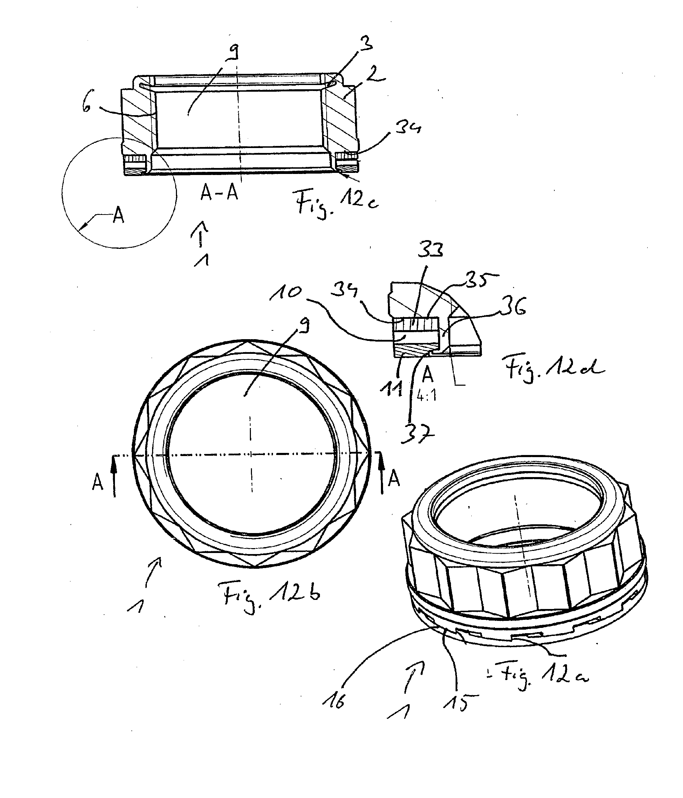

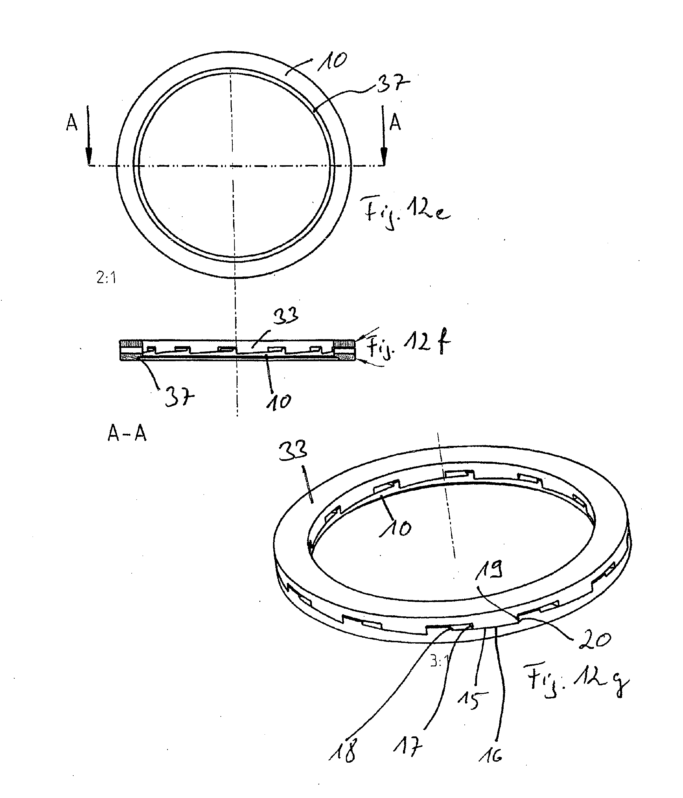

In den Fig. 12a bis 12c sind alternative Befestigungsmittel 1 gezeigt, bei denen im Unterschied zu den vorstehenden Ausführungsbeispielen die ersten Nockenflächen 15 sowie die ersten Festziehanschlagflächen 17 und die ersten Löseanschlagflächen 19 nicht unmittelbar an der Schraubenmutter 2, sondern an einer zwischen Schraubenmutter 2 und dem Ringelement 10 aufgenommenen Nockenscheibe 33 angeordnet sind. Mit anderen Worten bilden die Nockenscheibe 33 und das Ringelement 10 ein Nockenscheibenpaar, mit welchem die Schraubenmutter und das Ringelement 10 gegeneinander verspannbar sind. Die einander zugewandten Ringflächen von Schraubenmutter 2 und Nockenscheibe 33 sind glatt, so dass zumindest im nicht verspannten Zustand ein Relativverdrehen zwischen Schraubenmutter 2 und dem Nockenflächenpaar möglich ist.

Das Funktionsprinzip der in den Fig. 12a bis 12d gezeigten alternativen Befestigungsmittel 1 entspricht grundsätzlich dem Funktionsprinzip des zuvor erläuterten Befestigungsmittel, so dass im Folgenden im Wesentlichen auf die Unterschiede zwischen den Ausführungsformen eingegangen wird, um Wiederholungen weitgehend zu vermeiden. Im Hinblick auf die Gemeinsamkeiten wird auf vorstehende Figurenbeschreibung sowie vorstehende Figuren verwiesen. Zur besseren Verdeutlichung des Zusammenwirkens des Nockenflächenpaares, bestehend aus Ringelement 10 und Nockenscheibe 33 wird auf die Figuren 12e bis 12g verwiesen, die dieses Detail der Befestigungsmittel gemäß den Fig. 12a bis 12d zeigen.

Die selbstsichernden Befestigungsmittel 1 gemäß den Fig. 12a bis 12g dienen zur Fixierung in der in der Fig. 6 gezeigten Art und Weise.

Die in den Fig. 12a bis 12d gezeigte Schraubenmutter 2 entspricht hinsichtlich des Aufbaus der Bremsmomentmittel 3 und des Innengewindes 6, welches sich in der Durchstecköffnung 9 befindet den vorstehenden Ausführungsbeispielen. Zu erkennen ist eine untere glatte Ringfläche 34, mit der sich die Mutter axial an einer entgegengerichteten, d.h. von dem zu befestigenden Bauteil wegweisenden oberen Ringfläche 35 der Nockenscheibe 33 abstützt, welche sich wiederum mit ihren ersten Nockenflächen 15 an entgegengerichteten zweiten Nockenflächen 16 des Ringelementes 10 abstützt.

Das Ringelement 10 ist sandwichartig aufgenommen zwischen der Nockenscheibe 33 und einen fakultativen Sicherungsring 11, welcher axial formschlüssig an der Schraubenmutter 2 gehalten ist. Hierzu hintergreift die Schraubenmutter 2 den Sicherungsring 11 mit einem Ringfortsatz 36, der sich axial entlang der Innenumfangsflächen der Nockenscheibe und des Ringelementes erstreckt und dann nach radial außen kragt in eine radial innere Aussparung 37 (Ringstufe) hinein und zwar mit Axialabstand zur unteren, ringförmigen Auflagefläche des Sicherungsrings 11. In analoger Weise könnte das Nockenflächenpaar, bestehend aus Ringelement 10 und Nockenscheibe 33 ohne Sicherungsring 11 gesichert werden. In diesem Fall würde der Ringfortsatz 36 radial in eine nicht dargestellte innere Aussparung des Ringelementes 10 eingreifen. Ebenso wäre es möglich im Falle des Verzichtes auf die Nockenscheibe 33 entweder nur das Ringelement 10 oder das Ringelement 10 in Kombination mit dem fakultativen Sicherungsring 11 an der Schraubenmutter 2 zu sichern.

In Fig. 12g sind die an der Nockenscheibe 33 ausgebildeten, nach unten weisenden ersten Nockenflächen 15 gezeigt, die entlang von den eine größere Umfangserstreckung aufweisenden zweiten Nockenflächen 16 des Ringelementes 10 gleiten können. Aus Fig. 12g ergibt sich weiter die Lage der ersten Festziehanschlagflächen 17 der Nockenscheibe 33, die mit, in dem gezeigten Ausführungsbeispiel hierzu parallelen zweiten Festziehanschlagflächen 18 des Ringelementes zusammenwirken können. Ebenso ist die Paarung aus ersten und zweiten Löseanschlagflächen 19 und 20 zu erkennen.

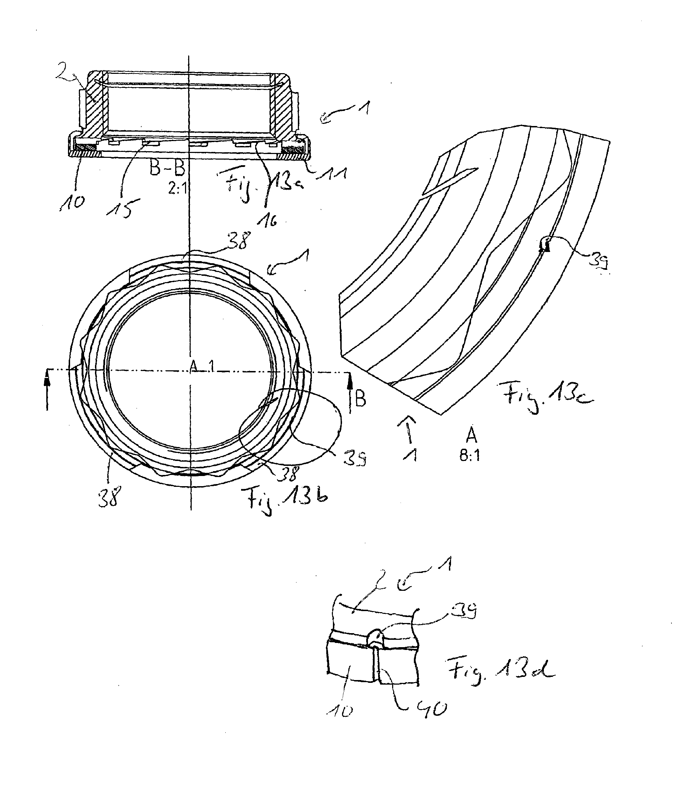

Im Folgenden werden anhand der Fig. 13a bis Fig. 19d unterschiedliche Ausführungsformen von Befestigungsmitteln beschrieben, deren Funktionsweise sich aus den vorher beschriebenen Ausführungsbeispielen ergibt, so dass diesbezüglich auf die vorstehende Figurenbeschreibung sowie die zugehörigen Figuren verwiesen wird. Die im Folgenden erläuterten Ausführungsbeispiele unterscheiden sich von den vorstehenden Ausführungsbeispielen im Wesentlichen nur durch das Vorsehen von eine vorgegebene (optimale) Sicherungsposition kennzeichnenden Markierungen an den die Nockenflächen tragenden Bauteilen. Derartige Markierungen können auch bei sämtlichen zuvor beschriebenen Ausführungsbeispielen vorgesehen werden.

In den Fig. 13a bis Fig. 13d ist ein Ausführungsbeispiel von Befestigungsmitteln gezeigt, bei welchen erste Nockenflächen 15 an der Schraubenmutter 2 und zweite Nockenflächen 16 an dem darunter befindlichen Ringelement 10 angeordnet sind. Das Ringelement 10 ist unverlierbar an der Schraubenmutter 2 mit Hilfe des Sicherungsringes 11 gehalten, der im Gegensatz zu den vorhergehenden Ausführungsbeispielen drei gleichmäßig in Umfangsrichtung beabstandete Aussparungen 38 (Fensterabschnitte) aufweist. Anders ausgedrückt ist der Sicherungsring 11 in einem oberen Bereich (nicht in einem unteren Bereich) in Umfangsrichtung unterbrochen ausgebildet. Zu erkennen sind erste umfangsseitige Markierungen 39 umfangsseitig in der Schraubenmutter 2 und damit korrespondierende zweite Markierungen 40 in dem Sicherungselement 11.

In Fig. 13d ist zu erkennen, dass die erste Markierung 39, welche seitlich in die Schraubenmutter 2 eingeprägt ist eine größere Radialerstreckung nach radial innen sowie eine größere Umfangserstreckung aufweist als die zweite Markierung 40. Insgesamt ist die erste Markierung 39 durch einen größeren Radius gekennzeichnet, so dass die zweite Markierung 40 von oben her betrachtet durch die erste Markierung 39 hindurch zu erkennen ist, so dass komfortabel aus einer Ansicht von oben, beispielsweise aus Fig. 13c zu erkennen ist, wenn die Markierungen 39, 40 dieselbe Umfangsposition aufweisen, d.h. miteinander fluchten. In dieser Position ist das gewünschte Festziehdrehmoment erreicht - die Befestigungsmittel 1 sind "scharfgestellt".

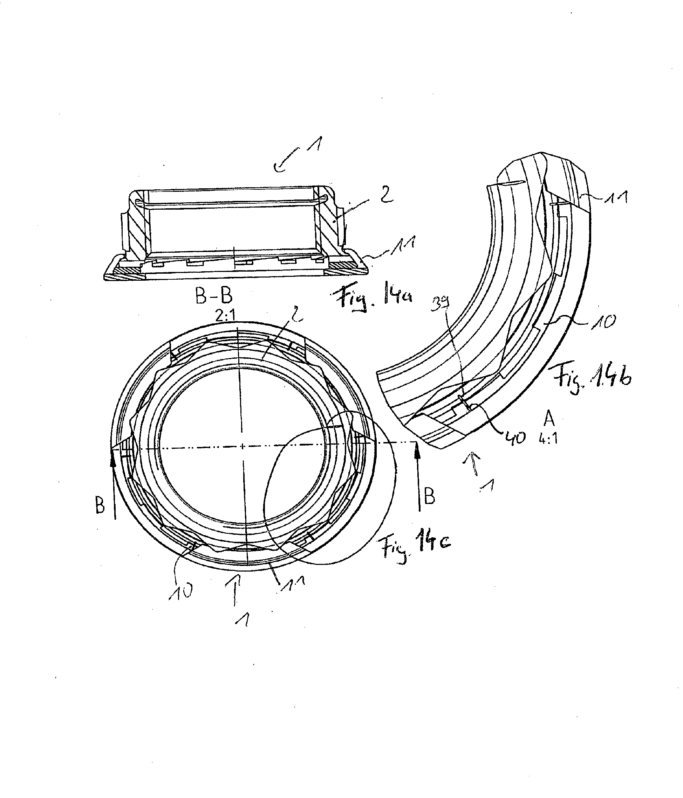

Das Ausführungsbeispiel gemäß den Fig. 14a bis Fig. 14c von Befestigungsmitteln 1 unterscheidet sich von dem Ausführungsbeispiel gemäß den Fig. 13a bis Fig. 13d dadurch, dass das Ringelement 10 sowie der darunter befindliche Sicherungsring 11 am Außenumfang konisch konturiert sind, so dass die in dem Ringelement 10 vorgesehenen zweiten Markierungen 40 besser gesehen werden können.

Aus den Fig. 14a bis Fig. 14c ergibt sich weiterhin, dass nicht nur das Ringelement 10 am Außenumfang konisch konturiert ist, sondern auch die Schraubenmutter 2 in einen die ersten Markierungen 39 aufnehmenden Bereich, wobei die Konusfläche der Schraubenmutter 2 und die Konusfläche des Ringelementes 10 ineinander übergehen. Die Markierungen 39, 40 sind in dem gezeigten Ausführungsbeispiel gleichartig ausgeformt in der Form von linienförmigen Einkerbungen. Aufgrund der Konusflächen an Schraubenmutter 2 und Ringelement 10 kann auf eine unterschiedliche Gestaltung derselben verzichtet werden.

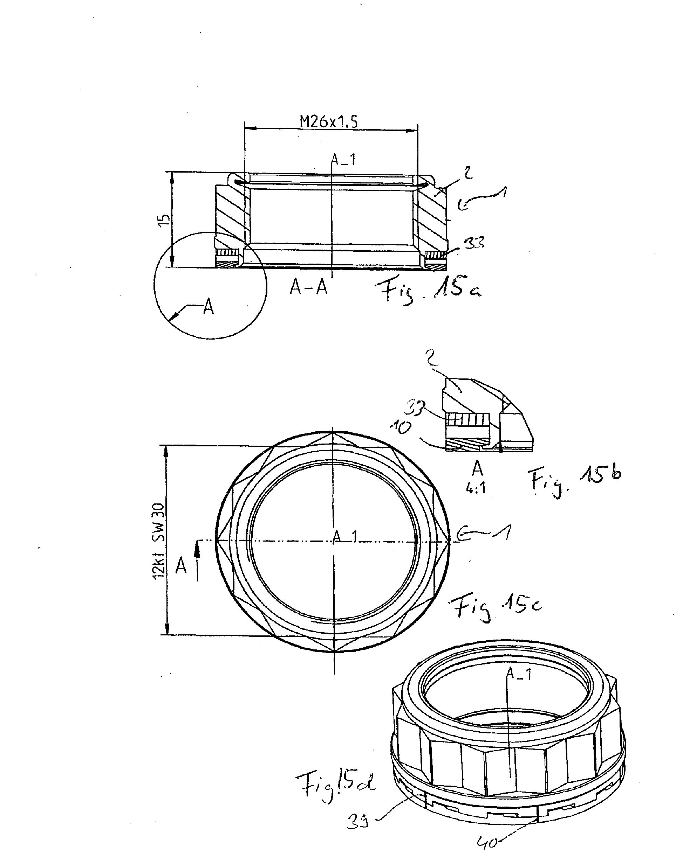

In den Fig. 15a bis Fig. 15d ist ein alternatives Ausführungsbeispiel von Befestigungsmitteln 1 gezeigt, wobei hier auf das Vorsehen von Konusflächen an der vorgesehenen Nockenscheibe 33 verzichtet wurde. Die Nockenscheibe 33 wird in dem gezeigten Ausführungsbeispiel - analog zu dem Ausführungsbeispiel gemäß den Fig. 12a bis Fig. 12d über einen Ringfortsatz 36 (Bördelkragen) axial gesichert an der Schraubenmutter 2. Die Nockenscheibe 33 und das Ringelement 10 sind hohlzylindrisch konturiert und weisen am Außenumfang erste bzw. zweite Markierungen 39, 40 auf.

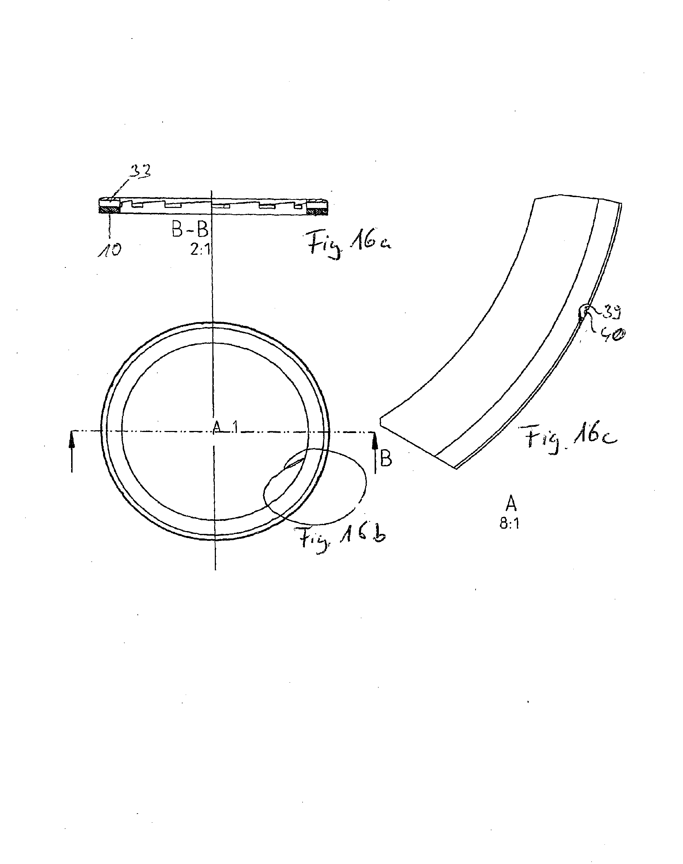

In dem Ausführungsbeispiel gemäß den Fig. 16a bis Fig. 16c ist ein Nockenflächen-Paar, bestehend aus Nockenscheibe 33 und Ringelement 10 gezeigt, die außen nicht konisch sondern zylindrisch konturiert sind. Erste und zweite Markierungen 39, 40 sind hier unterschiedlich konturiert, um ein leichtes Ablesen von oben zu ermöglichen. Die ersten Markierungen weisen einen größeren Radius auf als die zweiten Markierungen 40, so dass letztere durch die ersten Markierungen 39 von oben her betrachtet (s. Fig. 16c) hindurch sichtbar sind, wenn dieselbe Umfangsposition erreicht ist.

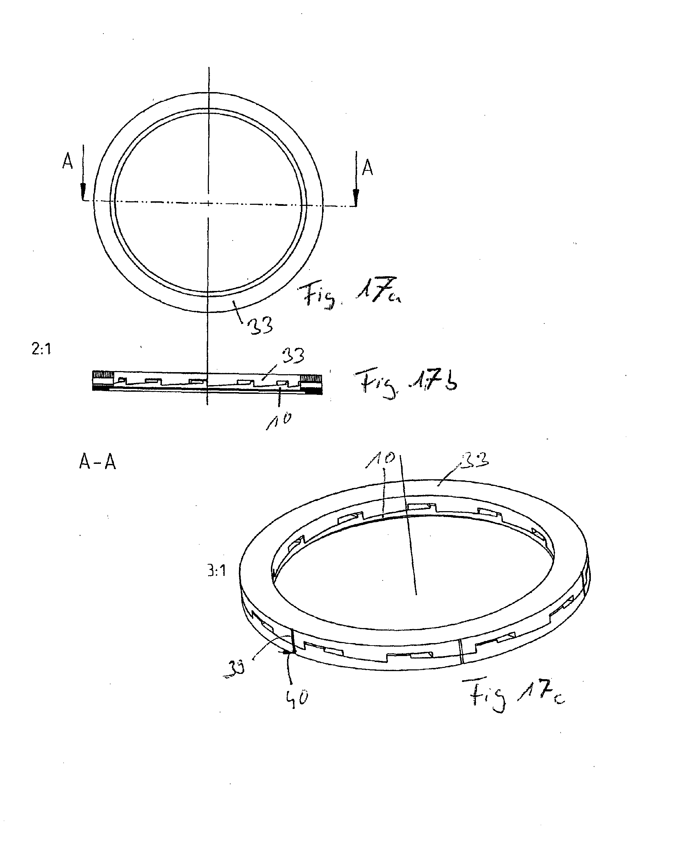

Bei dem Ausführungsbeispiel gemäß den Fig. 17a bis Fig. 17c sind anstelle unterschiedlicher erster und zweiter Markierungen 39, 40 gleichkonturierte erste und zweite Markierungen 39, 40 vorgesehen. Nockenscheibe 33 und Ringelement 10 sind hohlzylindrisch konturiert.

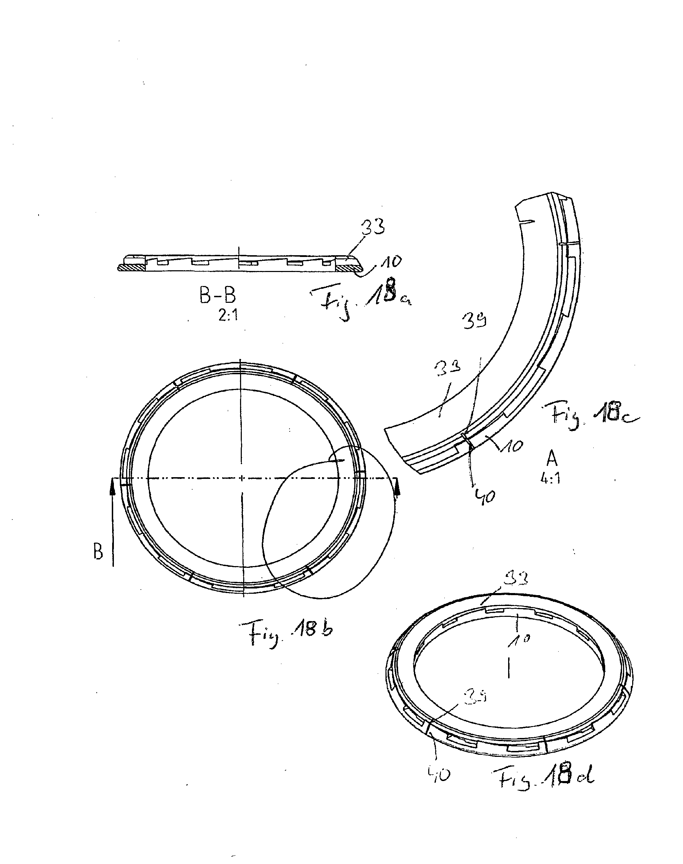

In dem Ausführungsbeispiel gemäß den Fig. 18a bis Fig. 18d weisen sowohl die Nockenscheibe 33 als auch das Ringelement 10 am Außenumfang eine konische Kontur auf, wobei die Konusflächen fließend ineinander übergehen. An der Nockenscheibe 33 sind mehrere gleichmäßig in Umfangsrichtung verteilt angeordnete erste, linienförmige Markierungen 39 und am Ringelement 10 identisch konturierte zweite Markierungen 40 vorgesehen, wobei die Markierungen 39, 40 auch als Einprägungen am Außenumfang der Stellpartner bzw. Nockenflächenpartner vorgesehen sind.

### Bezugszeichenliste

- 1: selbstsichernde Befestigungsmittel
- 2: Schraubenmutter
- 3: Bremsmomentmittel
- 4: Innengewindeabschnitt
- 5: Innengewindeabschnitt
- 6: Innengewinde
- 7: Antrieb
- 8: Durchgangsöffnung
- 9: Durchstecköffnung
- 10: Ringelement
- 11: Sicherungsring
- 12: Unterseite
- 13: Oberseite
- 14: Unterseite
- 15: erste Nockenfläche
- 16: zweite Nockenfläche
- 17: erste Festziehanschlagfläche
- 18: zweite Festziehanschlagfläche
- 19: erste Löseanschlagfläche
- 20: zweite Löseanschlagfläche
- 21: erste Zinnen
- 22: zweite Zinnen
- 23: Umfangsnut
- 24: Befestigungsanordnung
- 25: Außengewinde
- 26: Achszapfen
- 27: zu sicherndes Bauteil
- 28: Keilverzahnung
- 29: Kontaktfläche/Berührungsfläche
- 30: Kugeloberfläche
- 31: Kugelhüllkontur
- 32: Pfannenhüllkontur
- 33: Nockenscheibe
- 34: untere Ringfläche
- 35: obere Ringfläche
- 36: Ringfortsatz
- 37: Aussparung
- 38: Aussparung
- 39: erste Markierungen
- 40: zweite Markierungen

- F: Festziehrichtung
- E: Einschraubrichtung

## Patentansprüche

1. Selbstsichernde Befestigungsmittel zum Zusammenwirken mit einem Außengewinde (25) um auf ein zu sicherndes Bauteil (27) eine Spannkraft auszuüben, mit:
• einer Schraubenmutter (2), umfassend eine Durchgangsöffnung (8) mit Innengewinde (6) zum Verschrauben mit dem Außengewinde (25), einen Antrieb (7) zum Zusammenwirken mit einem Werkzeug zum Festziehen der Schraubenmutter (2) in eine Festziehumfangsrichtung aufweist um die Schraubenmutter in eine axiale Einschraubrichtung (E) in Richtung des zu sichernden Bauteils (27) zu verstellen,
• mindestens einer ersten Nockenfläche (15), die an einer unteren Stirnseite der Schraubenmutter (2) oder an einer unterhalb der unteren Stirnseite der Schraubenmutter angeordneten, eine mit der Durchgangsöffnung (8) fluchtende Öffnung aufweisenden, fakultativen Nockenscheibe (33) vorgesehen ist,
• einem axial benachbart zu der Schraubenmutter (2) oder der fakultativen Nockenscheibe (33) angeordneten Ringelement (10), das eine mit der Durchgangsöffnung (8) der Schraubenmutter fluchtende Durchstecköffnung (9) zum Durchstecken des Außengewinde (25) aufweist und das an einer oberen, der Schraubenmutter (2) zugewandten Stirnseite mindestens eine zweite Nockenfläche (16) aufweist, die in die erste Nockenfläche (15) eingreift, um die Schraubenmutter (2) und das Ringelement (10) bei einer Relativdrehbewegung zwischen Schraubenmutter (2) und dem Ringelement (10) axial relativ zueinander zu verstellen, wobei die erste Nockenfläche (15) und/oder die zweite Nockenfläche (16) in der Festziehrichtung (F) betrachtet entgegen der axialen Einschraubrichtung (E) ansteigen/ansteigt,
• Bremsmittel zum Erhöhen der Reibung zwischen zwischen der Schraubenmutter (2) und dem Außengewinde (25),
**dadurch gekennzeichnet,**
• **dass** die Schraubenmutter (2) oder die fakultative Nockenscheibe mindestens eine in der Festziehrichtung (F) wirksame erste Festziehanschlagfläche (17) zum Zusammenwirken mit einer zweiten Festziehanschlagfläche (18) des Ringelementes (10) aufweist, so dass die Schraubenmutter (2) oder die fakultative Nockenscheibe (33) das Ringelement (10) beim Kraftbeaufschlagen des Antriebs (7) der Schraubenmutter (2) mit dem Werkzeug in der Festziehrichtung (F) in der Festziehrichtung (F), insbesondere nach einem Gleiten der ersten Nockenfläche (15) entlang der zweiten Nockenfläche (16), mitnimmt,
und
• **dass** die Bremsmittel (3) derart ausgelegt und ausgebildet sind, dass diese ein Verdrehen der Schraubenmutter (2) bei einem Verdrehen des Ringelementes (10) entgegen der Festziehrichtung (F) verhindern, um bei Krafteinwirkung auf das Ringelementes (10) entgegen der Festziehumfangsrichtung ein eine axiale Relativverstellbewegung zwischen der Schraubenmutter (2) und dem Ringelement (10) voneinander weg zu bewirken, um dadurch die Schraubenmutter (2) und das Ringelement (10) stärker gegeneinander zu verspannen.

2. Befestigungsmittel nach Anspruch 1,
**dadurch gekennzeichnet,**
**dass** sich die Schraubenmutter (2) oder die fakultative Nockenscheibe an dem Ringelement (10) in axialer Richtung ausschließlich über mindestens eine Nockenfläche absfützend ausgebildet ist.

3. Befestigungsmittel nach einem der Ansprüche 1 oder 2,
**dadurch gekennzeichnet,**
**dass** die, vorzugsweise an der Schraubenmutter (2) angeordneten, Bremsmomentmittel das Bremsmoment, vorzugsweise ausschließlich, durch elastische Verformung bewirkend ausgebildet sind

4. Befestigungsmittel nach einem der Ansprüche 1 oder 2,
**dadurch gekennzeichnet,**
**dass** der Steigungswinkel der ersten und der zweiten Nockenfläche (15, 16) gleich ist und/oder dass die erste Nockenfläche (15) und/oder die zweite Nockenfläche (16) als Rampe mit einem Steigungswinkel ausgebindet sind/ist, der dem 1,5 bis 6-fachen, vorzugsweise dem 2 bis 5-fachen, noch weiter bevorzugt dem 3 bis 4-fachen Innengewindesteigungswinkel des Innengewindes (6) der Schraubenmutter (2) entspricht.

5. Befestigungsmittel nach einem der vorhergehenden Ansprüche,
**dadurch gekennzeichnet,**
**dass** das Ringelement (10) und/oder die fakultative Nockenscheibe antriebsfrei ausgebildet ist

6. Befestigungsmittel nach einem der vorhergehenden Ansprüche,
**dadurch gekennzeichnet,**
**dass** die Schraubenmutter (2) mindestens erste Löseanschlagfläche (19) zum Zusammenwirken mit einer entgegen der Festziehrichtung (F) wirksamen zweiten Löseanschlagfläche (20) des Ringelementes (10) auf-weist, so dass die Schraubenmutter (2) das Ringelement (10) beim Kraftbeaufschlagen des Antriebs (7) der Schraubenmutter (2) mit dem Werkzeug entgegen der Festziehrichtung (F) entgegen der Festziehrichtung (F), insbesondere nach einem Gleiten der ersten Nockenfläche (15) entlang der zweiten Nockenfläche (16), mitnimmt.

7. Befestigungsmittel nach Anspruch 6,
**dadurch gekennzeichnet,**
**dass** die erste Löseanschlagfläche (19) und/oder die zweite Löseanschlagfläche (20) eine größere Steigung aufweisen/aufweist als die Steigung der ersten und zweiten Nockenfläche (15, 16), oder dass die erste Löseanschlagfläche (19) und/oder die zweite Löseanschlagfläche (20), zumindest näherungsweise, parallel zur axialen Einschraubrichtung (E) ausgerichtet sind/ist.

8. Befestigungsmittel nach einem der vorhergehenden Ansprüche,
**dadurch gekennzeichnet,**
**dass** die erste Festziehanschlagfläche (17) und/oder die zweite Festziehanschlagfläche (18) eine größere Steigung aufweisen/aufweist als die Steigung der ersten und zweiten Nockenfläche (16), oder dass die erste Festziehanschlagfläche (17) und/oder die zweite Festziehanschlagfläche (18), zumindest näherungsweise, parallel zur axialen Einschraubrichtung (E) ausgerichtet sind/ist,

9. Befestigungsmittel nach einem der Ansprüche 6 bis 8,
**dadurch gekennzeichnet,**
**dass** die erste Festziehanschlagfläche (17) über die in Festziehrichtung (F) ansteigende erste Nockenfläche (15) von der ersten Löseanschlagfläche (19), beabstandet ist und dass die zweite Festziehanschlagfläche (18) über die in Festziehrichtung (F) ansteigende zweite Nockenfläche (16) von der zweiten Löseanschlagfläche (20) beabstandet ist.

10. Befestigungsmittel nach einem der Ansprüche 6 bis 9,
**dadurch gekennzeichnet,**
**dass** an der Schraubenmutter (2) oder an der fakultativen Nockenscheibe (33) mehrere in Umfangsrichtung beabstandete erste Zinnen (21) und an dem Ringelement (10) mehrere in Umfangsrichtung über die ersten Zinnen (21) beabstandete zweite Zinnen (22) vorgesehen sind, und dass die ersten und die zweiten Zinnen (21, 22) verzahnungsartig ineinander greifen, und dass an zumindest an einer der ersten Zinnen (21) sowohl eine erste Festziehanschlagsfläche (17) zum Zusammenwirken mit einer zweiten Festziehanschlagfläche (18) vorgesehen ist, die an einer in der Festziehrichtung (F) benachbarten zweiten Zinne (22) angeordnet ist, als auch eine erste Löseanschlagfläche (19) vorgesehen ist zum Zusammenwirken mit einer zweiten Löseanschlagfläche (20) einer entgegen der Festziehrichtung (F) benachbarten zweiten Zinne (22).

11. Befestigungsmittel nach Anspruch 10,
**dadurch gekennzeichnet,**
**dass** entweder untere Stirnseiten der ersten Zinnen (21) oder obere Stirnseiten der zweiten Zinnen (22) in jeder Relativverdrehposition zweischen der Schraubenmutter (2) und dem Ringelement (10) voneinander beabstandet sind, oder dass an den unteren Stirnseiten der ersten Zinnen (21) erste Nockenflächen (15) zum Zusammenwirken mit zweiten Nockenflächen (16) und an den oberen Stirnseiten der zweiten Zinnen (22) zweite Nockenflächen (16) zum Zusammenwirken mit ersten Nockenflächen (15) angeordnet sind.

12. Befestigungsmittel nach einem der vorhergehenden Ansprüche,
**dadurch gekennzeichnet,**
**dass** das Ringelement, (10) unverlierbar an der Schraubenmutter (2) angeordnet ist, vorzugsweise dadurch dass das Ringelement (10) mit seiner von der Schraubenmutter (2) abgewandten Seite auf einem Sicherungsring aufliegt, der das Ringelement (10), vorzugsweise zusammen mit der fakultativen Nockenscheibe (33), unverlierbar an der Schraubenmutter (2) sichert und der relativ verdrehbar sowohl zu der Schraubenmutter (2) als auch zu dem Ringelement (10) angeordnet ist, oder dadurch, dass das Ringelement (10) unmittelbar sichernd mit der Schraubenmutter (2) in axialer Richtung formschlüssig zusammenwirkt.

13. Befestigungsmittel nach Anspruch 12,
**dadurch gekennzeichnet,**
**dass** eine Unterseite des Sicherungsrings (11) und/oder eine Oberseite des Sicherungsrings (11), insbesondere durch das Vorsehen einer Reibreduzierbeschichtung und/oder durch Härten und/oder durch Nitrieren, haftreibungsreduziert sind/ist.

14. Befestigungsmittel nach einem der vorhergehenden Ansprüche,
**dadurch gekennzeichnet,**
**dass** die mindestens eine erste Nockenfläche (15) und die mindestens eine zweite Nockenflächen (16) als Kugel-Pfannen-Paarung ausgebildet sind, so dass die Schraubenmutter (2) und das Ringelement (10) auf einer gedachten Kügeloberfläche (30), insbesondere zum Ausgleich von Planlauffehlern und/oder zur Ausrichtung des Innengewindes (6), relativ zueinander gleiten können.

15. Befestigungsmittel nach einem der vorhergehenden Ansprüche,
**dadurch gekennzeichnet,**
**dass** an der Schraubenmutter (2) oder der fakultativen Nockenscheibe (33) eine, vorzugsweise umfangsseitige, erste Markierung vorgesehen ist und an dem Ringelement (10) eine, vorzugsweise umfangsseitige, zweite Markierung vorgesehen ist, wobei die erste und die zweite Markierung beim relativen Verdrehen der Schraubenmutter (2) oder der fakultativen Nockenscheibe (33) zu dem Ringelement (10) relativ zueinander verstellt werden, wobei die erste und die zweite Markierung so angeordnet sind, dass diese, in einer vorbestimmten Relativposition, insbesondere wenn sie sich auf demselben Umfangswinkel befinden, ein vorgegebenes Festziehdrehmoment erreicht ist, bei welchem die erste Festziehanschlagfläche (17) in Umfangsrichtung von der zweiten Festziehanschlagfläche (18) beabstandet ist.

16. Befestigungsmittel nach Anspruch 15,
**dadurch gekennzeichnet,**
**dass** die erste und die zweite Markierung (39,40) in einem von dem Sicherungsring (11) ausgesparten Umfangsabschnitt angeordnet sind und/oder dass die Schraubenmutter (2) in einem die erste Markierung (39) aufnehmenden Bereich konisch konturiert ist und/oder dass das Ringelement (10) am Außenumfang in einem die zweite Markierung (40) aufnehmenden Bereich am Außenumfang konisch konturiert ist und/oder dass der Sicherungsring (11) am Außenumfang konisch konturiert ist.

17. Befestigungsmittel nach einem der vorhergehenden Ansprüche,
**dadurch gekennzeichnet,**
**dass** die, vorzugsweise gleichmäßig in Umfangsrichtung beabstandeten, ersten Nockenflächen (15) als Flächenabschnitte einer gemeinsamen konvexen Kugelhüllkontur (31) ausgeformt sind und die, vorzugsweise gleichmäßig in Umfangsrichtung beabstandeten zweiten Nockenflächen (16) als Flächenabschnitte einer gemeinsamen konkaven, zur Kugelhüllkontur (31) korrespondieren Pfannenhüllkontur (32) ausgeformt sind, oder umgekehrt, so dass die Schraubenmutter (2) relativ zu dem Ringelement (10) um einen gedachten Mittelpunkt (M) verschwenkbar ist.

18. Befestigungsanordnung mit Befestigungsmitteln nach einem der vorhergehenden Ansprüche,
**dadurch gekennzeichnet,**
**dass** das Außengewinde (25) an einem Achszapfen (26) eines Kraftfahrzeugs ausgebildet ist, und dass das zu sichernde Bauteil (27) eine Radnabe des Kraftfahrzeugs ist, und dass die Radnabe, insbesondere über eine Keilverzahnung (28), an dem Achszapfen (26) festgelegt ist.

19. Sicherungsverfahren zum Sichern eines zu sichernden Bauteile (27) unter Verwendung von Befestigungsmitteln nach einem der Ansprüche 1 bis 17, insbesondere zur Herstellung einer Befestigungsanordnung nach Anspruch 18 mit den Schritten:
• Aufschrauben der Befestigungsmittel (1) auf ein Außengewinde (25), vorzugsweise eines Achszapfens (26) eines Kraftfahrzeugs, und dabei Verdrehen der Schraubenmutter (2) in eine Festziehrichtung (F), so dass die Schraubenmutter (2) axial in eine Einschraubrichtung (E) in Richtung auf das zu sichernde Bauteil (27), insbesondere eine Radnabe eines Kraftfahrzeugs, verstellt wird bis zu Erreichen eines ersten FestziehDrehmoments,
• danach Verdrehen der Schraubenmutter (2) über einen Umfangswinkel entgegen der Festziehrichtung (F), derart, dass die erste Nocke ein Stück weit entlang der zweiten Nocke bewegt wird, und dadurch Verringern der Spannung zwischen Schraubenelement und Ringelement (10).

## Claims

1. A self-securing fastening means for interacting with an external thread (25) in order to apply a tensioning force to a component (27) which is to be secured, with:
• a screw nut (2), comprising a through-opening (8) with an internal thread (6) for screwing with the external thread (25), a drive (7) for interacting with a tool for tightening the screw nut (2) in a tightening circumferential direction in order to move the screw nut in an axial screwing-in direction (E) in the direction of the component (27) which is to be secured,
• at least a first cam surface (15), which is provided on a lower face side of the screw nut (2) or on an optional cam plate (33) arranged beneath the lower face side of the screw nut and having an opening aligned with the through-opening (8),
• an annular element (10) arranged axially adjacent to the screw nut (2) or to the optional cam plate (33), which annular element has an insertion opening (9), aligned with the through-opening (8) of the screw nut, for the insertion of the external thread (25), and which has on an upper face side, facing the screw nut (2), at least a second cam surface (16), which engages into the first cam surface (15), in order to move the screw nut (2) and the annular element (10) axially relative to one another on a relative rotational movement between screw nut (2) and the annular element (10), wherein the first cam surface (15) and/or the second cam surface (16), viewed in the tightening direction (F), rise(s) counter to the axial screwing-in direction (E),
• braking means for increasing the friction between the screw nut (2) and the external thread (25),
**characterized in that**
• the screw nut (2) or the optional cam plate has at least a first tightening stop surface (17), active in the tightening direction (F), for interacting with a second tightening stop surface (18) of the annular element (10), so that the screw nut (2) or the optional cam plate (33) carries along the annular element (10) upon force activation of the drive (7) of the screw nut (2) by the tool in the tightening direction (F) in the tightening direction (F), in particular once the first cam surface (15) has slid along the second cam surface (16),
and
• that the braking means (3) are designed and constructed such that they prevent rotation of the screw nut (2) upon rotation of the annular element (10) counter to the tightening direction (F), in order that, when the annular element (10) is subjected to the action of force counter to the tightening circumferential direction, the screw nut (2) and the annular element (10) are adjusted axially away from one another, in order thus for the screw nut (2) and the annular element (10) to be braced to a more pronounced extent in relation to one another.

2. The fastening means according to Claim 1,
**characterized in that**
the screw nut (2) or the optional cam plate is constructed in a supporting manner on the annular element (10) in axial direction exclusively via at least one cam surface.

3. The fastening means according to one of Claims 1 or 2,
**characterized in that**
the braking torque means, preferably arranged on the screw nut (2), are constructed bringing about the braking torque, preferably exclusively, by elastic deformation.

4. The fastening means according to one of Claims 1 or 2,
**characterized in that**
the pitch angle of the first and of the second cam surface (15, 16) is identical and/or that the first cam surface (15) and/or the second cam surface (16) is/are constructed as a ramp with a pitch angle which corresponds to 1.5 to 6 times, preferably 2 to 5 times, still further preferably 3 to 4 times the internal thread pitch angle of the internal thread (6) of the screw nut (2).

5. The fastening means according to one of the preceding claims,
**characterized in that**
the annular element (10) and/or the optional cam plate is constructed so as to be drive-free.

6. The fastening means according to one of the preceding claims,
**characterized in that**
the screw nut (2) has at least first loosening stop surface (19) for interacting with a second loosening stop surface (20) of the annular element (10) active counter to the tightening direction (F), so that the screw nut (2) carries along the annular element (10) upon force activation of the drive (7) of the screw nut (2) by the tool counter to the tightening direction (F) counter to the tightening direction (F), in particular once the first cam surface (15) has slid along the second cam surface (16).

7. The fastening means according to Claim 6,
**characterized in that**
the first loosening stop surface (19) and/or the second loosening stop surface (20) has/have a greater pitch than the pitch of the first and second cam surface (15, 16), or that the first loosening stop surface (19) and/or the second loosening stop surface (20) is/are aligned, at least approximately, parallel to the axial screwing-in direction (E).

8. The fastening means according to one of the preceding claims,
**characterized in that**
the first tightening stop surface (17) and/or the second tightening stop surface (18) has/have a greater pitch than the pitch of the first and second cam surface (16), or that the first tightening stop surface (17) and/or the second tightening stop surface (18) is/are aligned, at least approximately, parallel to the axial screwing-in direction (E).

9. The fastening means according to one of Claims 6 to 8,
**characterized in that**
the first tightening stop surface (17) is spaced apart from the first loosening stop surface (19) via the first cam surface (15) rising in the tightening direction (F), and that the second tightening stop surface (18) is spaced apart from the second loosening surface (20) via the second cam surface (16) rising in the tightening direction (F).

10. The fastening means according to one of Claims 6 to 9,
**characterized in that**
several first peaks (21), spaced apart in circumferential direction, are provided on the screw nut (2) or on the optional cam plate (33), and several second peaks (22) are provided on the annular element (10) spaced apart in circumferential direction via the first peaks (21), and that the first and the second peaks (21, 22) engage into one another in the manner of a toothing, and that on at least one of the first peaks (21) both a first tightening stop surface (17) is provided for interacting with a second tightening stop surface (18), which is arranged on an adjacent second peak (22) in the tightening direction (F), and also a first loosening stop surface (19) is provided for interacting with a second loosening stop surface (20) of an adjacent second peak (22) counter to the tightening direction (F).

11. The fastening means according to Claim 10,
**characterized in that**
either lower face sides of the first peaks (21) or upper face sides of the second peaks (22) are spaced apart from one another in every relative rotation position between the screw nut (2) and the annular element (10), or that on the lower face sides of the first peaks (21) first cam surfaces (15) are arranged for interacting with second cam surfaces (16) and on the upper face sides of the second peaks (22) second cam surfaces (16) are arranged for interacting with first cam surfaces (15).

12. The fastening means according to one of the preceding claims,
**characterized in that**
the annular element (10) is arranged in a captive manner on the screw nut (2), preferably **in that** the annular element (10) rests with its face facing away from the screw nut (2) on a retaining ring which retains the annular element (10), preferably together with the optional cam plate (33), in a captive manner on the screw nut (2), and which is arranged so as to be rotatable relative both to the screw nut (2) and also to the annular element (10), or **in that** the annular element (10) interacts in a directly retaining manner with the screw nut (2) in a form-fitting manner in axial direction.

13. The fastening means according to Claim 12,
**characterized in that**
an underside of the retaining ring (11) and/or an upper side of the retaining ring (11) is/are reduced with regard to adhesive friction in particular by the provision of a friction-reducing coating and/or by hardening and/or by nitriding.

14. The fastening means according to one of the preceding claims,
**characterized in that**
the at least one first cam surface (15) and the at least one second cam surface (16) are constructed as a ball/socket pair, so that the screw nut (2) and the annular element (10) can slide relative to one another on an imaginary sphere surface (30), in particular for compensating run-out errors and/or for aligning the internal thread (6).

15. The fastening means according to one of the preceding claims,
**characterized in that**
a first, preferably circumferential, marking is provided on the screw nut (2) or on the optional cam plate (33), and a second, preferably circumferential, marking is provided on the annular element (10), wherein the first and the second marking are adjusted relative to one another upon the relative rotating of the screw nut (2) or of the optional cam plate (33) to the annular element (10), wherein the first and the second marking are arranged so that, in a predetermined relative position, in particular when they are situated on the same peripheral angle, a predetermined tightening torque is reached, at which the first tightening stop surface (17) is spaced apart from the second tightening stop surface (18) in circumferential direction.

16. The fastening means according to Claim 15,
**characterized in that**
the first and the second marking (39, 40) are arranged in a circumferential section which is recessed by the retaining ring (11) and/or that the screw nut (2) is contoured in a conical manner in a region receiving the first marking (39) and/or that the annular element (10) is contoured in a conical manner on the outer circumference in a region receiving the second marking (40) and/or that the retaining ring (11) is contoured in a conical manner on the outer circumference.

17. The fastening means according to one of the preceding claims,
**characterized in that**
the first cam surfaces (15), preferably spaced apart uniformly in circumferential direction, are shaped as surface sections of a shared convex ball envelope contour (31) and the second cam surfaces (16), preferably spaced apart uniformly in circumferential direction, are shaped as surface sections of a shared concave socket envelope contour (32) corresponding to the ball envelope contour (31), or vice versa, so that the screw nut (2) is pivotable relative to the annular element (10) about an imaginary centre point (M).

18. A fastening arrangement with fastening means according to one of the preceding claims,
**characterized in that**
the external thread (25) is constructed on an axle journal (26) of a motor vehicle, and that the component (27) which is to be secured is a wheel hub of the motor vehicle, and that the wheel hub is secured on the axle journal (26) in particular via a spline (28).

19. A securing method for securing a component (27) which is to be secured using fastening means according to one of Claims 1 to 17, in particular for the production of a fastening arrangement according to Claim 18 with the steps:
• screwing of the fastening means (1) onto an external thread (25), preferably an axle journal (26) of a motor vehicle, and in so doing rotating the screw nut (2) in a tightening direction (F), so that the screw nut (2) is adjusted axially in a screwing-in direction (E) in the direction of the component (27) which is to be secured, in particular a wheel hub of a motor vehicle, until reaching a first tightening torque,
• thereafter rotating of the screw nut (2) over a peripheral angle counter to the tightening direction. (F), such that the first cam is moved for a distance along the second cam, and thereby reducing the tension between screw element and annular element (10).

## Revendications

1. Moyen de fixation autobloquant destiné à coopérer avec un filetage externe (25) et à exercer sur un composant à fixer (27) une force de serrage, comprenant :
- un écrou de vis (2), comprenant une ouverture de passage (8) avec un filetage interne (6) pour le vissage avec le filetage externe (25), un entraînement (7) destiné à coopérer avec un outil pour serrer l'écrou de vis (2) dans une direction périphérique de serrage afin de déplacer l'écrou de vis dans une direction de vissage axiale (E) dans la direction du composant à fixer (27),
- au moins une première surface de came (15) qui est prévue sur un côté frontal inférieur de l'écrou de vis (2) ou sur un disque de came facultatif (33) disposé sous le côté frontal inférieur de l'écrou de vis, présentant une ouverture en affleurement avec l'ouverture de passage (8),
- un élément annulaire (10) disposé axialement en position adjacente à l'écrou de vis (2) ou au disque de came facultatif (33), qui présente une ouverture d'enfichage (9) en affleurement avec l'ouverture de passage (8) de l'écrou de vis pour l'enfichage du filetage externe (25) et qui présente, au niveau d'un côté frontal supérieur, tourné vers l'écrou de vis (2), au moins une deuxième surface de came (16) qui s'engage dans la première surface de came (15) afin de déplacer l'écrou de vis (2) et l'élément annulaire (10) axialement l'un par rapport à l'autre dans le cas d'un mouvement de rotation relatif entre l'écrou de vis (2) et l'élément annulaire (10), la première surface de came (15) et/ou la deuxième surface de came (16), considérées dans la direction de serrage (F), montant à l'encontre de la direction de vissage axiale (E),
- des moyens de freinage pour augmenter la friction entre l'écrou de vis (2) et le filetage externe (25),
**caractérisé en ce que**
- l'écrou de vis (2) ou le disque de came facultatif présente au moins une première surface de butée de serrage (17) agissant dans la direction de serrage (F), destinée à coopérer avec une deuxième surface de butée de serrage (18) de l'élément annulaire (10) de telle sorte que l'écrou de vis (2) ou le disque de came facultatif (33) entraîne l'élément annulaire (10) dans la direction de serrage (F), dans le cas d'une sollicitation par force de l'entraînement (7) appliquée sur l'écrou de vis (2) avec l'outil dans la direction de serrage (F), en particulier après un glissement de la première surface de came (15) le long de la deuxième surface de came (16),
et
- **en ce que** les moyens de freinage (3) sont conçus et réalisés de telle sorte qu'ils empêchent une rotation de l'écrou de vis (2) dans le cas d'une rotation de l'élément annulaire (10) à l'encontre de la direction de serrage (F), afin de provoquer, dans le cas de l'introduction d'une force sur l'élément annulaire (10) à l'encontre de la direction périphérique de serrage, un mouvement de déplacement relatif axial entre l'écrou de vis (2) et l'élément annulaire (10) à l'écart l'un de l'autre, afin de serrer plus fortement l'un contre l'autre l'écrou de vis (2) et l'élément annulaire (10).

2. Moyen de fixation selon la revendication 1,
**caractérisé en ce que**
l'écrou de vis (2) ou le disque de came facultatif est réalisé sur l'élément annulaire (10) de manière à s'appuyer dans la direction axiale exclusivement par le biais d'au moins une surface de came.

3. Moyen de fixation selon l'une quelconque des revendications 1 ou 2,
**caractérisé en ce que**
les moyens de couple de freinage disposés de préférence sur l'écrou de vis (2) sont réalisés de manière à provoquer le couple de freinage, de préférence exclusivement, par déformation élastique.

4. Moyen de fixation selon l'une quelconque des revendications 1 ou 2,
**caractérisé en ce que**
l'angle d'inclinaison de la première et de la deuxième surface de came (15, 16) sont identiques et/ou **en ce que** la première surface de came (15) et/ou la deuxième surface de came (16) sont réalisées sous forme de rampe avec un angle d'inclinaison qui correspond à 1,5 à 6 fois, de préférence à 2 à 5 fois, plus particulièrement préférablement à 3 à 4 fois l'angle d'inclinaison de filetage interne du filetage interne (6) de l'écrou de vis (2).

5. Moyen de fixation selon l'une quelconque des revendications précédentes,
**caractérisé en ce que**
l'élément annulaire (10) et/ou le disque de came facultatif sont réalisés sans entraînement.

6. Moyen de fixation selon l'une quelconque des revendications précédentes,
**caractérisé en ce que**
l'écrou de vis (2) présente au moins une première surface de butée de desserrage (19) destinée à coopérer avec une deuxième surface de butée de desserrage (20) de l'élément annulaire (10) agissant à l'encontre de la direction de serrage (F), de telle sorte que l'écrou de vis (2) entraîne l'élément annulaire (10) à l'encontre de la direction de serrage (F), dans le cas d'une sollicitation par force de l'entraînement (7) appliquée sur l'écrou de vis (2) avec l'outil à l'encontre de la direction de serrage (F), en particulier après un glissement de la première surface de came (15) le long de la deuxième surface de came (16).

7. Moyen de fixation selon la revendication 6,
**caractérisé en ce que**
la première surface de butée de desserrage (19) et/ou la deuxième surface de butée de desserrage (20) présentent une plus grande inclinaison que l'inclinaison de la première et de la deuxième surface de butée (15, 16), ou **en ce que** la première surface de butée de desserrage (19) et/ou la deuxième surface de butée le desserrage (20), sont orientées au moins approximativement parallèlement à la direction de vissage axiale (E).

8. Moyen de fixation selon l'une quelconque des revendications précédentes,
**caractérisé en ce que**
la première surface de butée de serrage (17) et/ou la deuxième surface de butée de serrage (18) présentent une plus grande inclinaison que l'inclinaison de la première et de la deuxième surface de came (16), ou **en ce que** la première surface de butée de serrage (17) et/ou la deuxième surface de butée de serrage (18) sont orientées au moins approximativement parallèlement à la direction de vissage axiale (E).

9. Moyen de fixation selon l'une quelconque des revendications 6 à 8,
**caractérisé en ce que**
la première surface de butée de serrage (17) est espacée de la première surface de butée de desserrage (19) par le biais de la première surface de came (15) montant dans la direction de serrage (F) et **en ce que** la deuxième surface de butée de serrage (18) est espacée de la deuxième surface de butée de desserrage (20) par le biais de la deuxième surface de came (16) montant dans la direction de serrage (F).

10. Moyen de fixation selon l'une quelconque des revendications 6 à 9,
**caractérisé en ce que**
plusieurs premières dents (21) espacées dans la direction périphérique sont prévues sur l'écrou de vis (2) ou sur le disque de came facultatif (33) et plusieurs deuxième dents (22) espacées des premières dents (21) dans la direction périphérique sont prévues sur l'élément annulaire (10) et **en ce que** les premières et deuxièmes dents (21, 22) s'engagent les unes dans les autres à la manière d'une denture et **en ce qu'**au niveau d'au moins l'une des premières dents (21) sont prévues à la fois une première surface de butée de serrage (17) destinée à coopérer avec une deuxième surface de butée de serrage (18), laquelle est disposée au niveau d'une deuxième dent (22) adjacente dans la direction de serrage (F), ainsi qu'une première surface de butée de desserrage (19) destinée à coopérer avec une deuxième surface de butée de desserrage (20) d'une deuxième dent (22) adjacente à l'encontre de la direction de serrage (F).

11. Moyen de fixation selon la revendication 10,
**caractérisé en ce que**
des côtés frontaux inférieurs des premières dents (21) ou des côtés frontaux supérieurs des deuxièmes dents (22) sont espacés les uns des autres dans chaque position de rotation relative entre l'écrou de vis (2) et l'élément annulaire (10) ou **en ce que** des premières surfaces de came (15) destinées à coopérer avec des deuxièmes surfaces de came (16) sont disposées au niveau des côtés frontaux inférieurs des premières dents (21) et des deuxièmes surfaces de came (16) destinées à coopérer avec des premières surfaces de came (15) sont disposées au niveau des côtés frontaux supérieurs des deuxièmes dents (22).

12. Moyen de fixation selon l'une quelconque des revendications précédentes,
**caractérisé en ce que**
l'élément annulaire (10) est disposé de manière imperdable sur l'écrou de vis (2), de préférence en ce que l'élément annulaire (10) repose, avec son côté opposé à l'écrou de vis (2), sur une bague de fixation qui fixe l'élément annulaire (10), de préférence conjointement avec le disque de came facultatif (33) de manière imperdable sur l'écrou de vis (2) et qui est disposée de manière rotative à la fois par rapport à l'écrou de vis (2) et par rapport à l'élément annulaire (10), ou en ce que l'élément annulaire (10) coopère directement par fixation avec l'écrou de vis (2) par engagement par correspondance de forme dans la direction axiale.

13. Moyen de fixation selon la revendication 12,
**caractérisé en ce**
**qu'**un côté inférieur de la bague de fixation (11) et/ou un côté supérieur de la bague de fixation (11), est/sont traités de manière à réduire les frottements d'adhérence, en particulier en prévoyant un revêtement réduisant les frictions et/ou par durcissement et/ou par nitruration.

14. Moyen de fixation selon l'une quelconque des revendications précédentes,
**caractérisé en ce que**
l'au moins une première surface de came (15) et l'au moins une deuxième surface de came (16) sont réalisées sous forme de paire rotule-cavité de telle sorte que l'écrou de vis (2) et l'élément annulaire (10) puissent glisser l'un par rapport à l'autre sur une surface sphérique imaginaire (30), en particulier pour compenser les erreurs de planéité et/ou pour aligner le filetage interne (6).

15. Moyen de fixation selon l'une quelconque des revendications précédentes,
**caractérisé en ce**
**qu'**au niveau de l'écrou de vis (2) ou du disque de came facultatif (33) est prévu un premier marquage, de préférence périphérique, et au niveau de l'élément annulaire (10) est prévu un deuxième marquage, de préférence périphérique, le premier et le deuxième marquage, lors de la rotation relative de l'écrou de vis (2) ou du disque de came facultatif (33) par rapport à l'élément annulaire (10), étant déplacés l'un par rapport à l'autre, le premier et le deuxième marquage étant disposés de telle sorte que, dans une position relative prédéterminée de ceux-ci, en particulier lorsqu'ils se trouvent sur le même angle périphérique, un couple de serrage prédéfini soit obtenu, auquel la première surface de butée de serrage (17) est espacée dans la direction périphérique de la deuxième surface de butée de serrage (18).

16. Moyen de fixation selon la revendication 15,
**caractérisé en ce que**
le premier et le deuxième marquage (39, 40) sont disposés dans une portion périphérique évidée de la bague de fixation (11) et/ou **en ce que** l'écrou de serrage (2) présente un contour conique dans une région recevant le premier marquage (39) et/ou en ce que l'élément annulaire (10) présente un contour conique au niveau de la périphérie extérieure dans une région de la périphérie extérieure recevant le deuxième marquage (40) et/ou **en ce que** la bague de fixation (11) présente un contour conique au niveau de la périphérie extérieure.

17. Moyen de fixation selon l'une quelconque des revendications précédentes,
**caractérisé en ce que**
les premières surfaces de came (15), de préférence espacées uniformément dans la direction périphérique, sont formées en tant que portions de surface d'un contour d'enveloppe sphérique convexe commun (31) et les deuxièmes surfaces de came (16), de préférence espacées uniformément dans la direction périphérique, sont formées en tant que portions de surfaces d'un contour d'enveloppe en forme de cavité concave commun (32), correspondant au contour d'enveloppe sphérique (31), ou inversement, de telle sorte que l'écrou de vis (2) puisse pivoter autour d'un centre imaginaire (M) par rapport à l'élément annulaire (10).

18. Agencement de fixation comprenant des moyens de fixation selon l'une quelconque des revendications précédentes,
**caractérisé en ce que**
le filetage externe (25) est réalisé au niveau d'un tourillon (26) d'un véhicule automobile et **en ce que** le composant à fixer (27) est un moyeu de roue du véhicule automobile et **en ce que** le moyeu de roue est fixé au tourillon (26), en particulier par le biais d'une cannelure (28).

19. Procédé de fixation pour la fixation d'un composant à fixer (27) en utilisant des moyens de fixation selon l'une quelconque des revendications 1 à 17, en particulier pour la fabrication d'un agencement de fixation selon la revendication 18, comprenant les étapes suivantes :
- vissage des moyens de fixation (1) sur un filetage externe (25), de préférence d'un tourillon (26) d'un véhicule automobile et rotation de l'écrou de vis (2) dans une direction de serrage (F), de telle sorte que l'écrou de vis (2) soit déplacé axialement dans une direction de vissage (E) dans la direction du composant à fixer (27), en particulier un moyeu de roue d'un véhicule automobile, jusqu'à l'obtention d'un premier couple de serrage,
- rotation subséquente de l'écrou de vis (2) sur un angle périphérique à l'encontre de la direction de serrage (F), de telle sorte que la première came soit quelque peu déplacée le long de la deuxième came, et réduction associée de la contrainte entre l'élément de vis et l'élément annulaire (10).
